(19) Europäisches Patentamt
European Patent Office
Office européen des brevets

(11) **EP 4 697 706 A1**

(12) **EUROPEAN PATENT APPLICATION**
published in accordance with Art. 153(4) EPC

(43) Date of publication:
**18.02.2026 Bulletin 2026/08**

(21) Application number: **24838380.4**

(22) Date of filing: **15.04.2024**

(51) International Patent Classification (IPC):
**H04N 19/139** (2014.01)

(52) Cooperative Patent Classification (CPC):
**H04N 19/139; H04N 19/85; H04N 19/91**

(86) International application number:
**PCT/CN2024/087795**

(87) International publication number:
**WO 2025/011120 (16.01.2025 Gazette 2025/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.07.2023 CN 202310848558**

(71) Applicant: **Huawei Technologies Co., Ltd.**
**Shenzhen, Guangdong 518129 (CN)**

(72) Inventors:
• SHI, Yibo
  Shenzhen, Guangdong 518129 (CN)
• MAO, Jue
  Shenzhen, Guangdong 518129 (CN)
• SOLOVYEV, Timofey Mikhailovich
  Shenzhen, Guangdong 518129 (CN)
• WANG, Jing
  Shenzhen, Guangdong 518129 (CN)

(74) Representative: **Eisenführ Speiser**
**Patentanwälte Rechtsanwälte PartGmbB**
**Gollierstraße 4**
**80339 München (DE)**

(54) **ENCODING METHOD, DECODING METHOD, AND ELECTRONIC DEVICE**

(57) Embodiments of this application provide an encoding method, a decoding method, and an electronic device. The encoding method includes: obtaining a to-be-encoded image; performing feature extraction on the to-be-encoded image to obtain a first feature map; determining a probability distribution parameter corresponding to the first feature map, where the probability distribution parameter includes a first index of a variance; performing first adjustment on the first feature map based on a first gain vector to obtain a second feature map; performing second adjustment on the first index based on a second gain vector to obtain a second index, where the second gain vector is obtained by converting the first gain vector to a logarithm domain, and the second adjustment is an addition operation; and performing entropy encoding on the second feature map based on the second index to obtain a bitstream. In this way, a computation amount of variance adjustment can be reduced.

FIG. 2B

**Description**

This application claims priority to Chinese Patent Application No. 202310848558.4, filed with the China National Intellectual Property Administration on July 11, 2023 and entitled "ENCODING METHOD, DECODING METHOD, AND ELECTRONIC DEVICE", which is incorporated herein by reference in its entirety.

**TECHNICAL FIELD**

Embodiments of this application relate to the encoding and decoding field, and in particular, to an encoding method, a decoding method, and an electronic device.

**BACKGROUND**

An AI (Artificial Intelligence, artificial intelligence) image compression algorithm is implemented based on deep learning, and has better compression effect than conventional image compression technologies (for example, JPEG (Joint Photographic Experts Group, joint photographic experts group) and BPG (Better Portable Graphics, better portable graphics)).

In an end-to-end AI image compression framework, after feature extraction is performed on a raw image to obtain a feature map, a probability distribution, for example, a variance of the feature map is determined. Then, the variance is adjusted and then quantized. Then, a probability distribution of each feature point in the feature map is determined based on the quantized variance, and entropy encoding is performed on a feature value of each feature point based on the probability distribution of each feature point to obtain a bitstream. However, in the conventional technology, a specific computation amount is required for variance adjustment, resulting in low efficiency of variance adjustment.

**SUMMARY**

To resolve the foregoing technical problem, this application provides an encoding method, a decoding method, and an electronic device. The method can reduce a computation amount of variance adjustment, thereby increasing efficiency of variance adjustment.

According to a first aspect, an embodiment of this application provides an encoding method. The method includes: first obtaining a to-be-encoded image; then performing feature extraction on the to-be-encoded image to obtain a first feature map, where a quantity of channels of the first feature map is c, a height of the first feature map is h, a width of the first feature map is w, the first feature map includes N feature points, N is a product of c, h, and w, and c, h, and w are positive integers; determining a probability distribution parameter corresponding to the first feature map, where the probability distribution parameter includes N first indexes, the N first indexes one-to-one correspond to N variances, and the N variances one-to-one correspond to the N feature points; then performing first adjustment on the first feature map based on a first gain vector to obtain a second feature map, where the second feature map includes the N feature points; performing second adjustment on the N first indexes based on a second gain vector to obtain N second indexes, where the second gain vector is obtained by converting the first gain vector to a logarithm domain, the second adjustment is an addition operation, and the N second indexes one-to-one correspond to the N feature points; and then performing entropy encoding on the second feature map based on the N second indexes to obtain a bitstream.

In other words, in this application, in a variance adjustment process, a multiplication operation between a variance and a gain is converted into an addition operation between an index of the variance and a gain converted to a logarithm domain. In this way, in some cases, a computation amount of variance adjustment can be reduced and efficiency of variance adjustment can be increased while compression performance is ensured, thereby increasing encoding efficiency. In some other cases, bit rate overheads can be reduced while a computation amount of variance adjustment is reduced and efficiency of variance adjustment is increased (because a process of training an entropy estimation network (namely, an entropy estimation network in the conventional technology) used to output a variance is inconsistent with a process of testing the entropy estimation network, but a process of training an entropy estimation network (namely, an entropy estimation network in this application) used to output a first index of a variance is consistent with a process of testing the entropy estimation network, bit rate overheads can be reduced in some cases).

In addition, in this application, a probability distribution table one-to-one corresponds to an index of a variance. Further, in an entropy encoding process, in this application, a corresponding probability distribution table may be directly determined based on a quantized second index, and then entropy encoding may be performed on a feature value of a feature point in the second feature map based on the probability distribution table. However, in the conventional technology, after adjustment and quantization are performed on a variance, a preset variance closest to the variance needs to be searched for from a plurality of preset variances (a probability distribution table one-to-one corresponds to the preset variance). Then, entropy encoding is performed on the feature value of the feature point in the second feature map based on a probability distribution table corresponding to the preset variance closest to the variance. In the conventional technology, a specific computation amount is required for searching for the preset variance closest to the variance. Therefore, in this application, a computation amount of entropy encoding can be further reduced, and efficiency of entropy encoding can be increased.

For example, the first feature map $\in R^{c*h*w}$, where $c*h*w$ may also be written as $c \times h \times w$. "*" and "$\times$" do not represent multiplication, but represent a dimension of R, namely, a dimension of the first feature map. "c" represents the quantity of channels of the first feature map, "h" represents a height of a feature map output by each channel, and "w" represents a width of the feature map output by each channel. In other words, the first feature map includes feature maps of c channels, a feature map of each channel may include h*w feature points, each feature point has one feature value, the first feature map may include feature values of the N feature points, N is a product of c, h, and w, and c, h, and w are all positive integers. For ease of subsequent description, the feature values of the N feature points in the first feature map are referred to as first feature values. In other words, the first feature map may include the first feature values of the N feature points.

For example, the second feature map $\in R^{c*h*w}$, and the second feature map may include second feature values of the N feature points.

For example, the probability distribution parameter corresponding to the first feature map may include an index (index, where one index is used to uniquely identify one variance; for ease of description, referred to as a first index below) of a variance corresponding to each of the N feature points of the first feature map. It should be understood that the probability distribution parameter may further include another parameter. This is not limited in this application.

For example, the first adjustment may be a multiplication operation. It should be noted that the multiplication operation may include two types of calculations: "multiplication" and "division". In this application, an example in which the first adjustment is "multiplication" is used for description.

It should be noted that the addition operation may include two types of calculations: "addition" and "subtraction". When the first adjustment is "multiplication", the second adjustment is "addition"; or when the first adjustment is "division", the second adjustment is "subtraction". In this application, an example in which the second adjustment is "addition" is used for description.

For example, the first gain vector may be determined based on a target bit rate. A size of the first gain vector may be "c*1". "c*1" may also be written as "c$\times$1". "*" and "$\times$" do not represent multiplication, but represent a dimension of the first gain vector. The first gain vector may include c gains, and one gain corresponds to one channel in the first feature map. In other words, all feature points in a same channel correspond to a same gain in the first gain vector.

For example, the first gain vector may be converted to the logarithm domain based on the first index of the variance to obtain the second gain vector.

For example, a size of the second gain vector may be c*1.

In addition, estimation information used to determine the probability distribution parameter may be written into the bitstream and transmitted to a decoder side, so that an entropy estimation network on the decoder side can determine the probability distribution parameter corresponding to the first feature map based on the estimation information. The estimation information may be determined based on the first feature map, or may be determined based on a feature map obtained by processing the first feature map. This is not limited in this application.

According to the first aspect, before performing the entropy encoding on the second feature map based on the N second indexes to obtain the bitstream, the method further includes: performing third adjustment on the second feature map based on a first step; and performing fourth adjustment on the N second indexes based on a second step, where the second step is obtained by converting the first step to a logarithm domain, and the fourth adjustment is an addition operation. In this way, the feature map (namely, the second feature map) and the index (namely, the second index) used for entropy encoding may be adjusted again, so that the second feature value of the feature point and the second index of the variance are more centralized, thereby reducing bit rate overheads to some extent. In addition, in a variance adjustment process, in this application, a multiplication operation between the variance and the second step is converted into an addition operation between the index of the variance and the second step, to reduce a computation amount of variance adjustment and increase efficiency of variance adjustment, thereby increasing encoding efficiency.

For example, the first step may be determined based on factors such as the target bit rate, target image quality, and channel quality.

For example, the first step may be converted to the logarithm domain based on the first index of the variance to obtain the second step.

It should be understood that, alternatively, before performing the first adjustment on the first feature map based on the first gain vector to obtain the second feature map, third adjustment is performed on the first feature map based on the first step; and before performing the second adjustment on the N first indexes based on the second gain vector to obtain the N second indexes, fourth adjustment is performed on the N first indexes based on the second step. In other words, an execution sequence of the first adjustment, the second adjustment, the third adjustment, and the fourth adjustment is not limited in this application.

According to the first aspect or any one of the foregoing implementations of the first aspect, the method further includes: generating a mask (mask) map corresponding to the first feature map, where the mask map is used for the third adjustment and/or the fourth adjustment.

The mask map may also be referred to as a binary mask map, and is used to extract a region of interest and mask a region of uninterest. A size of the mask map corresponding to the first feature map is the same as a size of the first feature map. The mask map corresponding to the first feature map may include a mask value corresponding to each of the N feature points of the first feature map. A mask value corresponding to one feature point is either 1 or 0. The first feature map is multiplied by the mask map corresponding to the first feature map. A feature point corresponding to the mask value of 1 is extracted, and third adjustment and fourth adjustment are performed on the extracted feature point. A feature point corresponding to the mask value of 0 is masked.

For example, the mask map is generated based on the N second indexes.

In this way, adaptive step adjustment can be performed on the second feature map and the second indexes, to reduce a difference between feature values of feature points and reduce a difference between indexes of variances corresponding to the feature points, thereby reducing a quantization loss and reducing bit rate overheads to some extent.

According to the first aspect or any one of the foregoing implementations of the first aspect, generating the mask (mask) map of the first feature map includes: dividing the first feature map into S feature blocks, where a height of the feature block is L1, a width of the feature block is L2, and L1, L2, and S are positive integers; performing pooling on Z second indexes corresponding to Z feature points included in the S feature blocks to obtain S pooled values corresponding to the S feature blocks, where Z is a product of L1, L2, and S; and generating, based on the S pooled values corresponding to the S feature blocks and a threshold converted to a logarithm domain, the mask map corresponding to the first feature map.

According to the first aspect or any one of the foregoing implementations of the first aspect, the probability distribution parameter further includes N mean values, and the N mean values one-to-one correspond to the N feature points. Before performing the first adjustment on the first feature map based on the first gain vector to obtain the second feature map, the method further includes: subtracting a corresponding mean value from a feature value of each feature point in the first feature map. In this way, probability distribution of each feature point may be adjusted to be approximately Gaussian distribution, thereby reducing a quantity of probability distribution tables used for entropy encoding and reducing memory occupation.

According to the first aspect or any one of the foregoing implementations of the first aspect, the pooling includes at least one of the following: average pooling, maximum pooling, or minimum pooling.

According to the first aspect or any one of the foregoing implementations of the first aspect, before performing the entropy encoding on the second feature map based on the N second indexes to obtain the bitstream, the method further includes: rounding the N second indexes. Because a corresponding probability distribution table needs to be generated for each index in advance, after the second indexes are rounded, only a probability distribution table corresponding to an integer needs to be preset. This can reduce a quantity of probability distribution tables used for entropy encoding and reduce memory occupation.

For example, rounding may be referred to as quantizing/quantization.

According to a second aspect, an embodiment of this application provides a decoding method. The method includes: first receiving a bitstream, where the bitstream includes encoded data of N feature points in a second feature map, a quantity of channels of the second feature map is c, a height of the second feature map is h, a width of the second feature map is w, N is a product of c, h, and w, and c, h, and w are positive integers; then determining a probability distribution parameter, where the probability distribution parameter includes N first indexes, the N first indexes one-to-one correspond to N variances, and the N variances one-to-one correspond to the N feature points; then performing an addition operation on the N first indexes based on a second gain vector to obtain N second indexes, where the N second indexes one-to-one correspond to the N feature points; then performing entropy decoding on the encoded data of the N feature points based on the N second indexes to obtain the second feature map; then performing adjustment on the second feature map based on a first gain vector to obtain a first feature map, where the second gain vector is obtained by converting the first gain vector to a logarithm domain; and performing reconstruction on the first feature map to obtain a reconstructed image of an image.

In this application, in a variance adjustment process, a multiplication operation between a variance and a gain is converted into an addition operation between an index of the variance and a gain converted to a logarithm domain. In this way, in some cases, a computation amount of variance adjustment can be reduced and efficiency of variance adjustment can be increased while compression performance is ensured, thereby increasing decoding efficiency.

In addition, in this application, a probability distribution table one-to-one corresponds to an index of a variance. Further, in an entropy decoding process, in this application, a corresponding probability distribution table may be directly determined based on a quantized second index, and then entropy decoding may be performed on a feature value of a feature point in the second feature map based on the probability distribution table. However, in the conventional technology, after adjustment and quantization are performed on a variance, a preset variance closest to the variance needs to be searched for from a plurality of preset variances (a probability distribution table one-to-one corresponds to the preset variance). Then, entropy decoding is performed on the feature value of the feature point in the second feature map based on a probability distribution table corresponding to the preset variance closest to the variance. In the conventional technology, a specific computation amount is required for searching for the preset variance closest to the variance. Therefore, in this application, a computation amount of entropy decoding can be further reduced, and efficiency of entropy decoding can be increased.

For example, the second feature map is obtained by performing first adjustment on the first feature map, the first feature map is obtained by performing feature extraction on the image, the first feature map includes the N feature points, a quantity of channels of the first feature map is c, a height of the first feature map is h, and a width of the first feature map is w. For example, that the probability distribution parameter corresponds to the first feature map may also be understood as that the probability distribution parameter corresponds to the second feature map.

For example, a size of the first gain vector may be c*1.

For example, a size of the second gain vector may be c*1.

For example, the "adjustment" in the second aspect may be "fifth adjustment" in a specific implementation, and the adjustment is an inverse process of the first adjustment. In other words, when the first adjustment is "multiplication", the adjustment is "division". When the first adjustment is "division", the adjustment is "multiplication".

According to the second aspect, the bitstream includes encoded data of N feature points in the second feature map obtained through third adjustment. Before performing reconstruction on the first feature map to obtain the reconstructed image of the image, the method further includes: performing sixth adjustment on the first feature map based on a first step, where the sixth adjustment is an inverse process of the third adjustment. Before performing the entropy decoding on the encoded data of the N feature points based on the N second indexes to obtain the second feature map, the method further includes: performing fourth adjustment on the N second indexes based on a second step, where the second step is obtained by converting the first step to a logarithm domain, and the fourth adjustment is an addition operation.

According to the second aspect or any one of the foregoing implementations of the second aspect, the method further includes: generating a mask (mask) map corresponding to the first feature map, where the mask map is used for the sixth adjustment and/or the fourth adjustment.

According to the second aspect or any one of the foregoing implementations of the second aspect, generating the mask (mask) map of the first feature map includes: dividing the first feature map into S feature blocks, where a height of the feature block is L1, a width of the feature block is L2, and L1, L2, and S are positive integers; performing pooling on Z second indexes corresponding to Z feature points included in the S feature blocks to obtain S pooled values corresponding to the S feature blocks, where Z is a product of L1, L2, and S; and determining, based on the S pooled values corresponding to the S feature blocks and a threshold converted to a logarithm domain, the mask map corresponding to the first feature map.

According to the second aspect or any one of the foregoing implementations of the second aspect, the probability distribution parameter further includes N mean values, and the N mean values one-to-one correspond to the N feature points. Before performing reconstruction on the first feature map to obtain the reconstructed image of the image, the method further includes: adding a corresponding mean value to a feature value of each feature point in the first feature map.

According to the second aspect or any one of the foregoing implementations of the second aspect, the pooling includes at least one of the following: average pooling, maximum pooling, or minimum pooling.

According to the second aspect or any one of the foregoing implementations of the second aspect, before performing the entropy decoding on the encoded data of the N feature points based on the N second indexes to obtain the second feature map, the method further includes: rounding the N second indexes.

The second aspect and any implementation of the second aspect respectively correspond to the first aspect and any implementation of the first aspect. For technical effects corresponding to the second aspect and any implementation of the second aspect, refer to the technical effects corresponding to the first aspect and any implementation of the first aspect. Details are not described herein again.

According to a third aspect, an embodiment of this application further provides an encoding method. The method includes: first obtaining a to-be-encoded image; then performing feature extraction on the to-be-encoded image to obtain a first feature map, where a quantity of channels of the first feature map is c, a height of the first feature map is h, a width of the first feature map is w, c, the first feature map includes N feature points, N is a product of c, h, and w, and c, h, and w are positive integers; determining a probability distribution parameter corresponding to the first feature map, where the probability distribution parameter includes N first indexes, the N first indexes one-to-one correspond to N variances, and the N variances one-to-one correspond to the N feature points; then performing first adjustment on the first feature map based on a first step to obtain a second feature map, where the second feature map includes the N feature points; performing second adjustment on first indexes corresponding to the N feature points based on a second step to obtain N second indexes, where the second step is obtained by converting the first step to a logarithm domain, the second adjustment is an addition operation, and the N second indexes one-to-one correspond to the N feature points; and then performing entropy encoding on the second feature map based on the N second indexes to obtain a bitstream.

In this application, in a variance adjustment process, a multiplication operation between a variance and the second step is converted into an addition operation between an index of the variance and the second step. In this way, in some cases, a computation amount of variance adjustment is reduced and efficiency of variance adjustment is increased while compression performance is ensured, thereby increasing encoding efficiency. In some other cases, bit rate overheads can be reduced while a computation amount of variance adjustment is reduced and efficiency of variance adjustment is increased (because a process of training an entropy estimation network (namely, an entropy estimation network in the conventional technology) used to output a variance is inconsistent with a process of testing the entropy estimation network, but a process of training an entropy estimation network (namely, an entropy estimation network in this application) used to determine a first index of a variance is consistent with a process of testing the entropy estimation network, bit rate overheads can be reduced in some cases).

According to the third aspect, the method further includes: generating a mask (mask) map corresponding to the first feature map, where the mask map is used for the first adjustment and/or the second adjustment.

According to the third aspect or any one of the implementations of the third aspect, generating the mask (mask) map of the first feature map includes: dividing the first feature map into S feature blocks, where a height of the feature block is L1, a width of the feature block is L2, and L1, L2, and S are positive integers; performing pooling on Z first indexes corresponding to Z feature points included in the S feature blocks to obtain S pooled values corresponding to the S feature blocks, where Z is a product of L1, L2, and S; and determining, based on the S pooled values corresponding to the S feature blocks and a threshold converted to a logarithm domain, the mask map corresponding to the first feature map.

According to the third aspect or any one of the implementations of the third aspect, the probability distribution parameter further includes N mean values, and the N mean values one-to-one correspond to the N feature points. Before performing the first adjustment on the first feature map based on the first step to obtain the second feature map, the method further includes: subtracting a corresponding mean value from a feature value of each feature point in the first feature map.

According to the third aspect or any one of the foregoing implementations of the third aspect, the pooling includes at least one of the following: average pooling, maximum pooling, or minimum pooling.

According to the third aspect or any one of the foregoing implementations of the third aspect, before performing the entropy encoding on the second feature map based on the N second indexes to obtain the bitstream, the method further includes: rounding the N second indexes.

The third aspect and any implementation of the third aspect respectively correspond to the first aspect and any implementation of the first aspect. For technical effects corresponding to the third aspect and any implementation of the third aspect, refer to the technical effects corresponding to the first aspect and any implementation of the first aspect. Details are not described herein again.

According to a fourth aspect, an embodiment of this application further provides a decoding method. The decoding method includes: first receiving a bitstream, where the bitstream includes encoded data of N feature points in a second feature map, a quantity of channels of the second feature map is c, a height of the second feature map is h, a width of the second feature map is w, N is a product of c, h, and w, and c, h, and w are positive integers; then determining a probability distribution parameter, where the probability distribution parameter includes N first indexes, the N first indexes one-to-one correspond to N variances, and the N variances one-to-one correspond to the N feature points; then performing an addition operation on the N first indexes based on a second step to obtain N second indexes, where the N second indexes one-to-one correspond to the N feature points; then performing entropy decoding on the encoded data of the N feature points based on the N second indexes to obtain the second feature map; then performing adjustment on the second feature map based on a first step to obtain a first feature map, where the second step is obtained by converting the first step to a logarithm domain; and performing reconstruction on the first feature map to obtain a reconstructed image of an image.

For example, the second feature map is obtained by performing first adjustment on the first feature map, the first feature map is obtained by performing feature extraction on the image, the first feature map includes the N feature points, a quantity of channels of the first feature map is c, a height of the first feature map is h, and a width of the first feature map is w. For example, that the probability distribution parameter corresponds to the first feature map may also be understood as that the probability distribution parameter corresponds to the second feature map.

For example, the "adjustment" in the fourth aspect may be "third adjustment" in a specific implementation, and the adjustment is an inverse process of the first adjustment. In other words, when the first adjustment is "multiplication", the adjustment is "division". When the first adjustment is "division", the adjustment is "multiplication".

According to the fourth aspect, the method further includes: generating a mask (mask) map corresponding to the first feature map, where the mask map is used for the adjustment and/or the addition operation.

According to the fourth aspect or any one of the foregoing implementations of the fourth aspect, generating the mask (mask) map of the first feature map includes: dividing the first feature map into S feature blocks, where a height of the feature block is L1, a width of the feature block is L2, and L1, L2, and S are positive integers; performing pooling on Z first indexes corresponding to Z feature points included in the S feature blocks to obtain S pooled values corresponding to the S feature blocks, where Z is a product of L1, L2, and S; and determining, based on the S pooled values corresponding to the S feature blocks and a threshold converted to a logarithm domain, the mask map corresponding to the first feature map.

According to the fourth aspect or any one of the foregoing implementations of the fourth aspect, the probability distribution parameter further includes N mean values, and the N mean values one-to-one correspond to the N feature points. Before performing reconstruction on the first feature map to obtain the reconstructed image of the image, the method further includes: adding a corresponding mean value to a feature value of each feature point in the first feature map.

According to the fourth aspect or any one of the foregoing implementations of the fourth aspect, the pooling includes at least one of the following: average pooling, maximum pooling, or minimum pooling.

According to the fourth aspect or any one of the implementations of the fourth aspect, before performing the entropy decoding on the encoded data of the N feature points based on the N second indexes to obtain the second feature map, the method further includes: rounding the N second indexes.

The fourth aspect and any implementation of the fourth aspect respectively correspond to the first aspect and any implementation of the first aspect. For technical effects corresponding to the fourth aspect and any implementation of the fourth aspect, refer to the technical effects corresponding to the first aspect and any implementation of the first aspect. Details are not described herein again.

According to a fifth aspect, an embodiment of this application further provides an encoding apparatus. The apparatus includes:

a first obtaining module, configured to obtain a to-be-encoded image;

a first encoding network, configured to perform feature extraction on the to-be-encoded image to obtain a first feature map, where a quantity of channels of the first feature map is c, a height of the first feature map is h, a width of the first feature map is w, the first feature map includes N feature points, N is a product of c, h, and w, and c, h, and w are positive integers;

a first entropy estimation network, configured to determine a probability distribution parameter corresponding to the first feature map, where the probability distribution parameter includes N first indexes, the N first indexes one-to-one correspond to N variances, and the N variances one-to-one correspond to the N feature points;

a first adjustment module, configured to perform first adjustment on the first feature map based on a first gain vector to obtain a second feature map, where the second feature map includes the N feature points; and

the first adjustment module is further configured to perform second adjustment on the N first indexes based on a second gain vector to obtain N second indexes, where the second gain vector is obtained by converting the first gain vector to a logarithm domain, the second adjustment is an addition operation, and the N second indexes one-to-one correspond to the N feature points; and

a first entropy encoding network, configured to perform entropy encoding on the second feature map based on the N second indexes to obtain a bitstream.

It should be noted that the encoding apparatus according to the fifth aspect may further include a communication module, and may be further configured to perform any implementation of the first aspect. Details are not described herein again.

The fifth aspect and any implementation of the fifth aspect respectively correspond to the first aspect and any implementation of the first aspect. For technical effects corresponding to the fifth aspect and any implementation of the fifth aspect, refer to the technical effects corresponding to the first aspect and any implementation of the first aspect. Details are not described herein again.

According to a sixth aspect, an embodiment of this application further provides a decoding apparatus. The apparatus includes:

a first receiving module, configured to receive a bitstream, where the bitstream includes encoded data of N feature points in a second feature map, a quantity of channels of the second feature map is c, a height of the second feature map is h, a width of the second feature map is w, N is a product of c, h, and w, and c, h, and w are positive integers;

a second entropy estimation network, configured to determine a probability distribution parameter, where the probability distribution parameter includes N first indexes, the N first indexes one-to-one correspond to N variances, and the N variances one-to-one correspond to the N feature points;

a second adjustment module, configured to perform an addition operation on the N first indexes based on a second gain vector to obtain N second indexes, where the N second indexes one-to-one correspond to the N feature points;

a first entropy decoding network, configured to perform entropy decoding on the encoded data of the N feature points based on the N second indexes to obtain the second feature map;

the second adjustment module, further configured to perform adjustment on the second feature map based on a first gain vector to obtain a first feature map, where the second gain vector is obtained by converting the first gain vector to a logarithm domain; and

a first decoding network, configured to perform reconstruction on the first feature map to obtain a reconstructed image of an image.

It should be noted that the decoding apparatus according to the sixth aspect may further include a communication module, and may be further configured to perform any implementation of the second aspect. Details are not described herein again.

The sixth aspect and any implementation of the sixth aspect respectively correspond to the first aspect and any implementation of the first aspect. For technical effects corresponding to the sixth aspect and any implementation of the sixth aspect, refer to the technical effects corresponding to the first aspect and any implementation of the first aspect. Details are not described herein again.

According to a seventh aspect, an embodiment of this application further provides an encoding apparatus. The apparatus includes:

a second obtaining module, configured to obtain a to-be-encoded image;

a second encoding network, configured to perform feature extraction on the to-be-encoded image to obtain a first feature map, where a quantity of channels of the first feature map is c, a height of the first feature map is h, a width of the first feature map is w, c, the first feature map includes N feature points, N is a product of c, h, and w, and c, h, and w are positive integers;

a third entropy estimation network, configured to determine a probability distribution parameter corresponding to the first feature map, where the probability distribution parameter includes N first indexes, the N first indexes one-to-one correspond to N variances, and the N variances one-to-one correspond to the N feature points;

a third adjustment module, configured to perform first adjustment on the first feature map based on a first step to obtain a second feature map, where the second feature map includes the N feature points; and

the third adjustment module is further configured to perform second adjustment on first indexes corresponding to the N feature points based on a second step to obtain N second indexes, where the second step is obtained by converting the first step to a logarithm domain, the second adjustment is an addition operation, and the N second indexes one-to-one correspond to the N feature points; and

a second entropy encoding module, further configured to perform entropy encoding on the second feature map based on the N second indexes to obtain a bitstream.

It should be noted that the encoding apparatus according to the seventh aspect may further include a communication module, and may be further configured to perform any implementation of the first aspect. Details are not described herein again.

The seventh aspect and any implementation of the seventh aspect respectively correspond to the second aspect and any implementation of the second aspect. For technical effects corresponding to the seventh aspect and any implementation of the seventh aspect, refer to the technical effects corresponding to the second aspect and any implementation of the second aspect. Details are not described herein again.

According to an eighth aspect, an embodiment of this application further provides a decoding apparatus. The apparatus includes:

a second receiving module, configured to receive a bitstream, where the bitstream includes encoded data of N feature points in a second feature map, a quantity of channels of the second feature map is c, a height of the second feature map is h, a width of the second feature map is w, N is a product of c, h, and w, and c, h, and w are positive integers;

a fourth entropy estimation network, configured to determine a probability distribution parameter, where the probability distribution parameter includes N first indexes, the N first indexes one-to-one correspond to N variances, and the N variances one-to-one correspond to the N feature points;

a fourth adjustment module, configured to perform an addition operation on the N first indexes based on a second step to obtain N second indexes, where the N second indexes one-to-one correspond to the N feature points;

a second entropy decoding network, configured to perform entropy decoding on the encoded data of the N feature points based on the N second indexes to obtain the second feature map;

the fourth adjustment module, further configured to perform adjustment on the second feature map based on a first step to obtain a first feature map, where the second step is obtained by converting the first step to a logarithm domain; and

a second decoding network, configured to perform reconstruction on the first feature map to obtain a reconstructed image of an image.

It should be noted that the decoding apparatus according to the eighth aspect may further include a communication module, and may be further configured to perform any implementation of the second aspect. Details are not described herein again.

The eighth aspect and any implementation of the eighth aspect respectively correspond to the second aspect and any implementation of the second aspect. For technical effects corresponding to the eighth aspect and any implementation of the eighth aspect, refer to the technical effects corresponding to the second aspect and any implementation of the second aspect. Details are not described herein again.

According to a ninth aspect, an embodiment of this application provides an electronic device, including a memory and a processor. The memory is coupled to the processor. The memory stores program instructions. When the program instructions are executed by the processor, the electronic device is enabled to perform the encoding method according to the first aspect or any possible implementation of the first aspect, or the electronic device is enabled to perform the encoding method according to the third aspect or any possible implementation of the third aspect.

The ninth aspect and any implementation of the ninth aspect respectively correspond to the first aspect and any implementation of the first aspect, or respectively correspond to the third aspect and any implementation of the third aspect. For technical effects corresponding to the ninth aspect and any implementation of the ninth aspect, refer to the technical effects corresponding to the first aspect and any implementation of the first aspect, or refer to the technical effects corresponding to the third aspect and any implementation of the third aspect. Details are not described herein again.

According to a tenth aspect, an embodiment of this application provides an electronic device, including a memory and a processor. The memory is coupled to the processor. The memory stores program instructions. When the program instructions are executed by the processor, the electronic device is enabled to perform the decoding method according to the second aspect or any possible implementation of the second aspect, or the electronic device is enabled to perform the decoding method according to the fourth aspect or any possible implementation of the fourth aspect.

The tenth aspect and any implementation of the tenth aspect respectively correspond to the second aspect and any implementation of the second aspect, or respectively correspond to the fourth aspect and any implementation of the fourth aspect. For technical effects corresponding to the tenth aspect and any implementation of the tenth aspect, refer to the technical effects corresponding to the second aspect and any implementation of the second aspect, or refer to the technical effects corresponding to the fourth aspect and any implementation of the fourth aspect. Details are not described herein again.

According to an eleventh aspect, an embodiment of this application provides a chip, including one or more interface circuits and one or more processors. The one or more processors receive or send data via the one or more interface circuits. When the one or more processors execute computer instructions, the method according to the first aspect or any possible implementation of the first aspect is performed, or the method according to the third aspect or any possible implementation of the third aspect is performed.

The eleventh aspect and any implementation of the eleventh aspect respectively correspond to the first aspect and any implementation of the first aspect, or respectively correspond to the third aspect and any implementation of the third aspect. For technical effects corresponding to the eleventh aspect and any implementation of the eleventh aspect, refer to the technical effects corresponding to the first aspect and any implementation of the first aspect, or refer to the technical effects corresponding to the third aspect and any implementation of the third aspect. Details are not described herein again.

According to a twelfth aspect, an embodiment of this application provides a chip, including one or more interface circuits and one or more processors. The one or more processors receive or send data via the one or more interface circuits. When the one or more processors execute computer instructions, the method according to the second aspect or any possible implementation of the second aspect is performed, or the method according to the fourth aspect or any possible implementation of the fourth aspect is performed.

The twelfth aspect and any implementation of the twelfth aspect respectively correspond to the second aspect and any implementation of the second aspect, or respectively correspond to the fourth aspect and any implementation of the fourth aspect. For technical effects corresponding to the twelfth aspect and any implementation of the twelfth aspect, refer to the technical effects corresponding to the second aspect and any implementation of the second aspect, or refer to the technical effects corresponding to the fourth aspect and any implementation of the fourth aspect. Details are not described herein again.

According to a thirteenth aspect, an embodiment of this application provides a computer-readable storage medium. The computer-readable storage medium stores a computer program. When the computer program is run on a computer or a processor, the computer or the processor is enabled to perform the encoding method according to the first aspect or any possible implementation of the first aspect, or the computer or the processor is enabled to perform the encoding method according to the third aspect or any possible implementation of the third aspect.

The thirteenth aspect and any implementation of the thirteenth aspect respectively correspond to the first aspect and any implementation of the first aspect, or respectively correspond to the third aspect and any implementation of the third aspect. For technical effects corresponding to the thirteenth aspect and any implementation of the thirteenth aspect, refer to the technical effects corresponding to the first aspect and any implementation of the first aspect, or refer to the technical effects corresponding to the third aspect and any implementation of the third aspect. Details are not described herein again.

According to a fourteenth aspect, an embodiment of this application provides a computer-readable storage medium. The computer-readable storage medium stores a computer program. When the computer program is run on a computer or a processor, the computer or the processor is enabled to perform the decoding method according to the second aspect or any possible implementation of the second aspect, or the computer or the processor is enabled to perform the decoding method according to the fourth aspect or any possible implementation of the fourth aspect.

The fourteenth aspect and any implementation of the fourteenth aspect respectively correspond to the second aspect and any implementation of the second aspect, or respectively correspond to the fourth aspect and any implementation of the fourth aspect. For technical effects corresponding to the fourteenth aspect and any implementation of the fourteenth aspect, refer to the technical effects corresponding to the second aspect and any implementation of the second aspect, or refer to the technical effects corresponding to the fourth aspect and any implementation of the fourth aspect. Details are not described herein again.

According to a fifteenth aspect, an embodiment of this application provides a computer program product. The computer program product includes computer instructions. When the computer instructions are executed by a computer or a processor, the computer or the processor is enabled to perform the encoding method according to the first aspect or any possible implementation of the first aspect, or the computer or the processor is enabled to perform the encoding method according to the third aspect or any possible implementation of the third aspect.

The fifteenth aspect and any implementation of the fifteenth aspect respectively correspond to the first aspect and any implementation of the first aspect, or respectively correspond to the third aspect and any implementation of the third aspect. For technical effects corresponding to the fifteenth aspect and any implementation of the fifteenth aspect, refer to the technical effects corresponding to the first aspect and any implementation of the first aspect, or refer to the technical effects corresponding to the third aspect and any implementation of the third aspect. Details are not described herein again.

According to a sixteenth aspect, an embodiment of this application provides a computer program product. The computer program product includes computer instructions. When the computer instructions are executed by a computer or a processor, the computer or the processor is enabled to perform the encoding method according to the second aspect or any possible implementation of the second aspect, or the computer or the processor is enabled to perform the encoding method according to the fourth aspect or any possible implementation of the fourth aspect.

The sixteenth aspect and any implementation of the sixteenth aspect respectively correspond to the second aspect and any implementation of the second aspect, or respectively correspond to the fourth aspect and any implementation of the fourth aspect. For technical effects corresponding to the sixteenth aspect and any implementation of the sixteenth aspect, refer to the technical effects corresponding to the second aspect and any implementation of the second aspect, or refer to the technical effects corresponding to the fourth aspect and any implementation of the fourth aspect. Details are not described herein again.

**BRIEF DESCRIPTION OF DRAWINGS**

FIG. 1A illustrates a system framework;

FIG. 1B illustrates a system framework;

FIG. 2A illustrates a compression framework;

FIG. 2B illustrates an encoding process;

FIG. 3 illustrates a decoding process;

FIG. 4A illustrates an encoding process;

FIG. 4B illustrates a mask map;

FIG. 5 illustrates a decoding process;

FIG. 6 illustrates an encoding process;

FIG. 7 illustrates a decoding process;

FIG. 8 illustrates an encoding apparatus;

FIG. 9 illustrates a decoding apparatus;

FIG. 10 illustrates an encoding apparatus;

FIG. 11 illustrates a decoding apparatus; and

FIG. 12 illustrates a structure of an apparatus.

## DESCRIPTION OF EMBODIMENTS

The following clearly and completely describes the technical solutions in embodiments of this application with reference to the accompanying drawings in embodiments of this application. It is clear that the described embodiments are a part other than all of embodiments of this application. All other embodiments obtained by a person of ordinary skill in the art based on embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and so on are intended to distinguish between different objects but do not describe a specific order of the objects. For example, a first target object, a second target object, and the like are used for distinguishing between different target objects, but are not used for describing a specific order of the target objects.

In embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. To be precise, use of the word like "example" or "for example" is intended to present a relative concept in a specific manner.

In descriptions of embodiments of this application, unless otherwise stated, "a plurality of" means two or more. For example, a plurality of processing units are two or more processing units, and a plurality of systems are two or more systems.

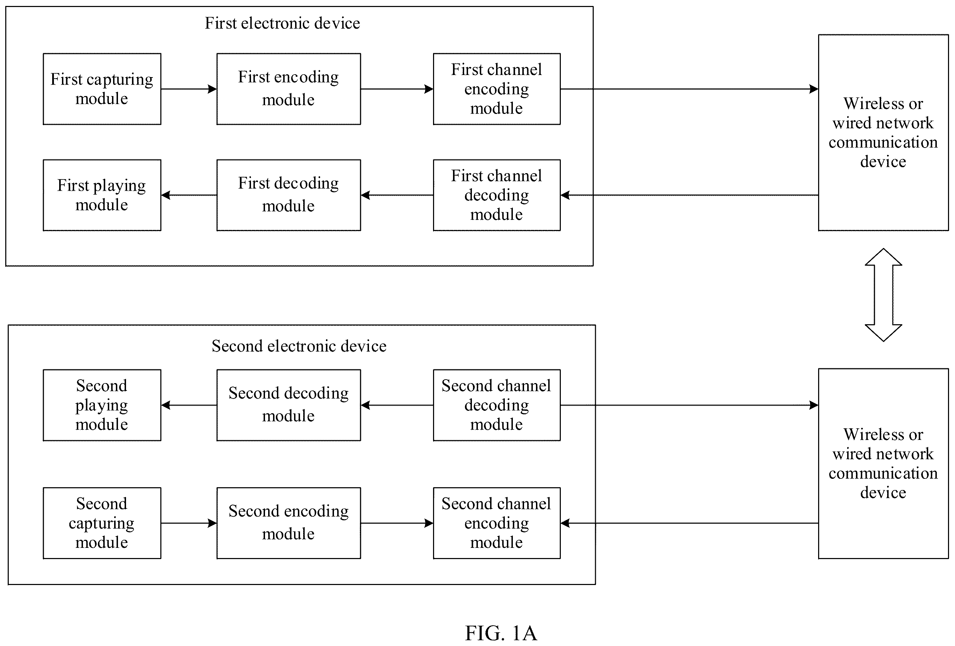

FIG. 1A illustrates a system framework.

Refer to FIG. 1A. For example, a first electronic device may include a first capturing module, a first encoding module, a first channel encoding module, a first channel decoding module, a first decoding module, and a first playing module. It should be understood that the first electronic device may include more or fewer modules than those shown in FIG. 1A. This is not limited in this application. In addition, the first encoding module may also be referred to as a first encoder, and the first decoding module may also be referred to as a first decoder.

Refer to FIG. 1A. For example, a second electronic device may include a second capturing module, a second encoding module, a second channel encoding module, a second channel decoding module, a second decoding module, and a second playing module. It should be understood that the second electronic device may include more or fewer modules than those shown in FIG. 1A. This is not limited in this application. In addition, the second encoding module may also be referred to as a second encoder, and the second decoding module may also be referred to as a second decoder.

For example, a process in which the first electronic device encodes and transmits video data to the second electronic device, and the second electronic device decodes and plays the video data may be as follows: The first capturing module may capture a video, and output the video data to the first encoding module. Then, the first encoding module may encode the video data, and output a bitstream to the first channel encoding module. Then, the first channel encoding module may perform channel encoding on the bitstream, and transmit, to the second electronic device via a wireless or wired network communication device, the bitstream obtained through channel encoding. Then, the second channel decoding module of the second electronic device may perform channel decoding on received data to obtain the bitstream, and output the bitstream to the second decoding module. Then, the second decoding module may decode the bitstream to obtain reconstructed video data, and then output the reconstructed video data to the second playing module, and the second playing module plays the reconstructed video data.

It should be understood that a process in which the second electronic device encodes and transmits video data to the first electronic device, and the first electronic device decodes and plays the video data is similar to the process in which the first electronic device transmits the video data to the second electronic device, and the second electronic device plays the video data. Details are not described herein again.

It should be understood that the first electronic device and the second electronic device may be directly connected to each other, and communicate with each other without the wireless or wired network communication device. This is not limited in this application.

For example, the first electronic device and the second electronic device each may include but are not limited to a personal computer, a computer workstation, a smartphone, a tablet computer, a server, a smart camera, a smart car, another type of cellular phone, a media consumption device, a wearable device, a set-top box, a game console, and the like.

For example, the system framework in FIG. 1A may be applied to any scenario in which encoding and decoding need to be performed, for example, a VR (Virtual Reality, virtual reality)/AR (Augmented Reality, augmented reality) scenario. In VR and AR scenarios, in a possible manner, the first electronic device is a server, and the second electronic device is a VR/AR device; or in a possible manner, the second electronic device is a server, and the first electronic device is a VR/AR device.

For example, when the first electronic device encodes video data, and the second electronic device decodes the video data to obtain reconstructed video data, the first electronic device may be referred to as an encoder side, and the second electronic device may be referred to as a decoder side. When the second electronic device encodes video data, and the first electronic device decodes the video data to obtain reconstructed video data, the second electronic device may be referred to as an encoder side, and the first electronic device may be referred to as a decoder side.

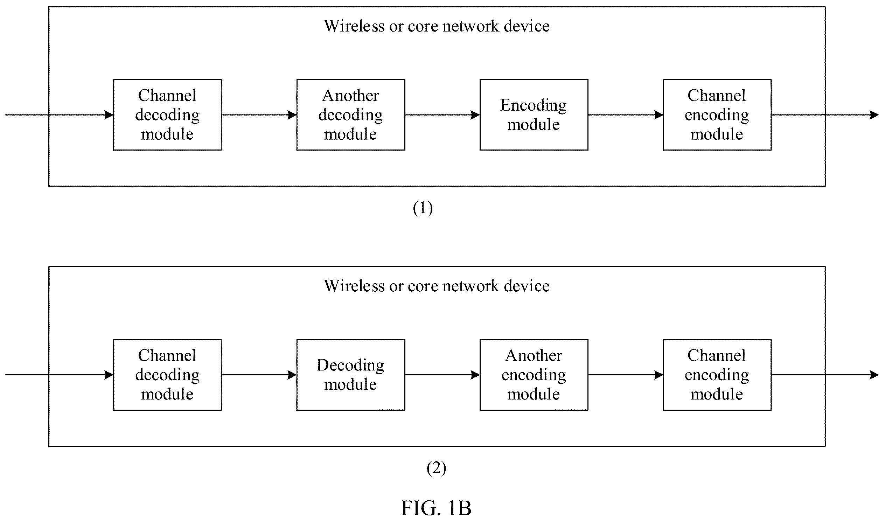

FIG. 1B illustrates a system framework.

Refer to (1) in FIG. 1B. For example, a wireless or core network device may include a channel decoding module, another decoding module, an encoding module (namely, an encoding module in this application), and a channel encoding module. The wireless or core network device may be used for transcoding.

For example, a specific application scenario of (1) in FIG. 1B may be as follows: When a first electronic device is not provided with an encoding module and is provided with only another encoding module, and a second electronic device is provided with only a decoding module and is not provided with another decoding module, the wireless or core network device may be used for transcoding, so that the second electronic device can decode and play video data encoded by the first electronic device via the another encoding module.

Specifically, the first electronic device encodes the video data via the another encoding module to obtain a bitstream 1, and sends the bitstream 1 to the wireless or core network device after performing channel encoding on the bitstream 1. Then, the channel decoding module of the wireless or core network device may perform channel decoding, and output the bitstream 1 obtained through channel decoding to the another decoding module. Then, the another decoding module decodes the bitstream 1 to obtain the video data, and outputs the video data to the encoding module. Then, the encoding module may encode the video data to obtain a bitstream 2, and output the bitstream 2 to the channel encoding module. After performing channel encoding on the bitstream 2, the channel encoding module sends the bitstream 2 to the second electronic device. In this way, the second electronic device can invoke the decoding module to decode the bitstream 2 obtained through channel decoding to obtain reconstructed video data; and subsequently, then the reconstructed video data can be played.

Refer to (2) in FIG. 1B. For example, a wireless or core network device may include a channel decoding module, a decoding module (namely, the encoding module in this application), another encoding module, and a channel encoding module. The wireless or core network device may be used for transcoding.

For example, a specific application scenario of (2) in FIG. 1B may be as follows: When a first electronic device is provided with only an encoding module and is not provided with another encoding module, and a second electronic device is not provided with a decoding module and is provided with only another decoding module, the wireless or core network device may be used for transcoding, so that the second electronic device can decode and play video data encoded by the first electronic device via the encoding module.

Specifically, the first electronic device encodes the video data via the encoding module to obtain a bitstream 1, and sends the bitstream 1 to the wireless or core network device after performing channel encoding on the bitstream 1. Then, the channel decoding module of the wireless or core network device may perform channel decoding, and output the bitstream 1 obtained through channel decoding to the decoding module. Then, the decoding module decodes the bitstream 1 to obtain the video data, and outputs the video data to the another encoding module. Then, the another encoding module may encode the video data to obtain a bitstream 2, and output the bitstream 2 to the channel encoding module. After performing channel encoding on the bitstream 2, the channel encoding module sends the bitstream 2 to the second electronic device. In this way, the second electronic device can invoke the another decoding module to decode the bitstream 2 obtained through channel decoding to obtain a reconstructed video data; and subsequently, the reconstructed video data can be played.

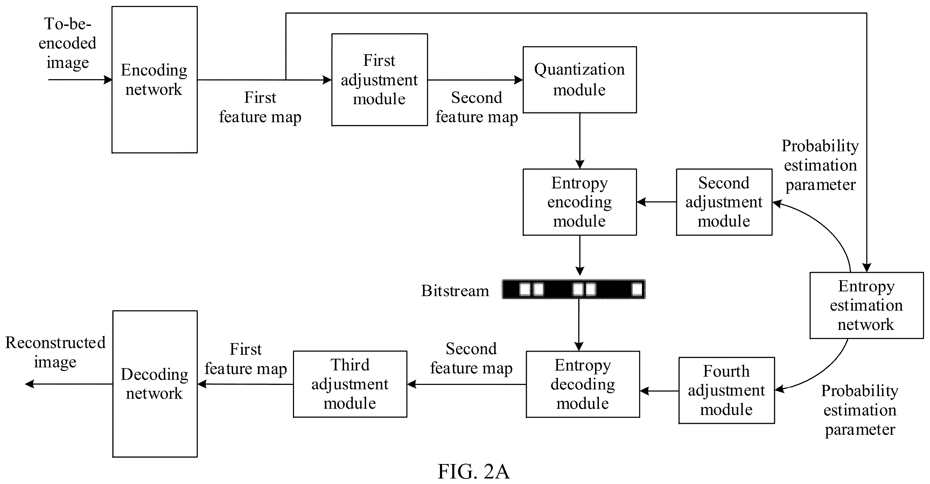

FIG. 2A illustrates a compression framework. In the embodiment in FIG. 2A, an end-to-end AI compression framework is shown. In FIG. 2A, an example in which one image is encoded and decoded is used for description.

Refer to FIG. 2A. For example, the end-to-end AI compression framework may include an encoding network, a quantization module, an entropy encoding module, an entropy estimation network, an entropy decoding module, a decoding network, a first adjustment module, a second adjustment module, a third adjustment module, and a fourth adjustment module.

For example, the encoding network may be configured to perform spatial transformation (which may also be referred to as feature extraction) on a to-be-encoded image, to transform the to-be-encoded image into another space. For example, the encoding network may be a convolutional neural network.

For example, the quantization module may be configured to perform quantization.

For example, the entropy estimation network may be configured to determine a probability distribution parameter corresponding to a feature map, for example, a mean value or a variance. This is not limited in this application.

For example, the entropy encoding module may be configured to perform entropy encoding on the feature map based on the probability distribution parameter.

For example, the entropy decoding module may be configured to perform entropy decoding on the feature map based on the probability distribution parameter.

For example, the decoding network may be configured to perform inverse spatial transformation (which may also be referred to as reconstruction or feature recovery) on the feature map, to output a reconstructed image. For example, the decoding network may be a convolutional neural network.

For example, entropy encoding is encoding in which no information is lost according to an entropy principle in an encoding process. Entropy encoding may include a plurality of types, for example, Shannon (Shannon) encoding, Huffman (Huffman) encoding, and arithmetic encoding (arithmetic coding). This is not limited in this application.

For example, the to-be-encoded image input to the encoding network may be any one of a raw (unprocessed) image, an RGB (Red Green Blue, red green blue) image, and a YUV ("Y" represents luminance (Luminance, Luma), and "U" and "V" represent chrominance (Chrominance, Chroma)) images. This is not limited in this application.

For example, the first adjustment module and the third adjustment module are configured to perform adjustment, for example, a multiplication operation, on the feature map.

For example, the second adjustment module and the fourth adjustment module are configured to perform adjustment, for example, an addition operation, on an index of a variance.

It should be noted that an implementation of the entropy estimation network is not limited in this application. For example, the entropy estimation network may be a hyperprior network.

Feature maps in embodiments of this application include a first feature map, a second feature map, a third feature map, a fourth feature map, and a fifth feature map, of which all $\in R^{c*h*w}$, where "c" represents a quantity of channels of a feature map, "h" represents a height of a feature map output by each channel, and "w" represents a width of the feature map output by each channel. A feature map of each channel may include feature values of h*w feature points. In other words, the feature map includes N feature points, and N is a product of c, w, and h. For ease of differentiation, a feature value of a feature point in the first feature map may be referred to as a first feature value, a feature value of a feature point in the second feature map may be referred to as a second feature value, a feature value of a feature point in the third feature map may be referred to as a third feature value, a feature value of a feature point in the fourth feature map may be referred to as a fourth feature value, and a feature value of a feature point in the fifth feature map may be referred to as a fifth feature value.

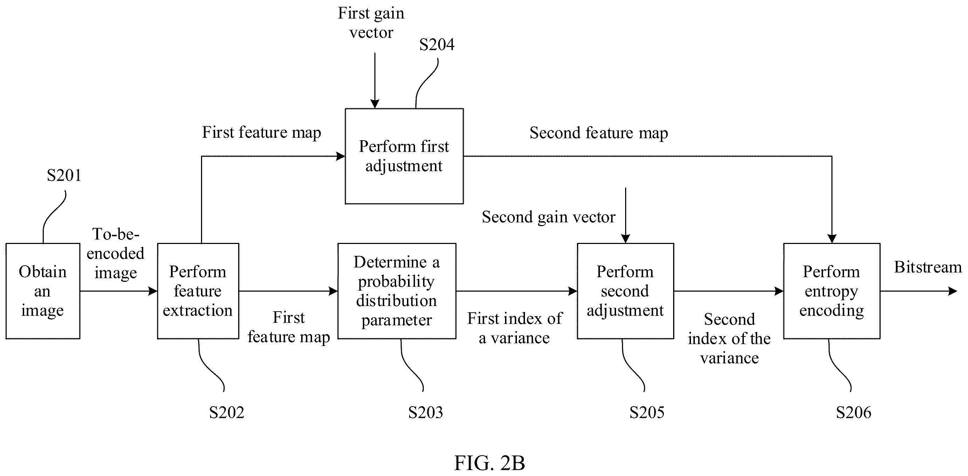

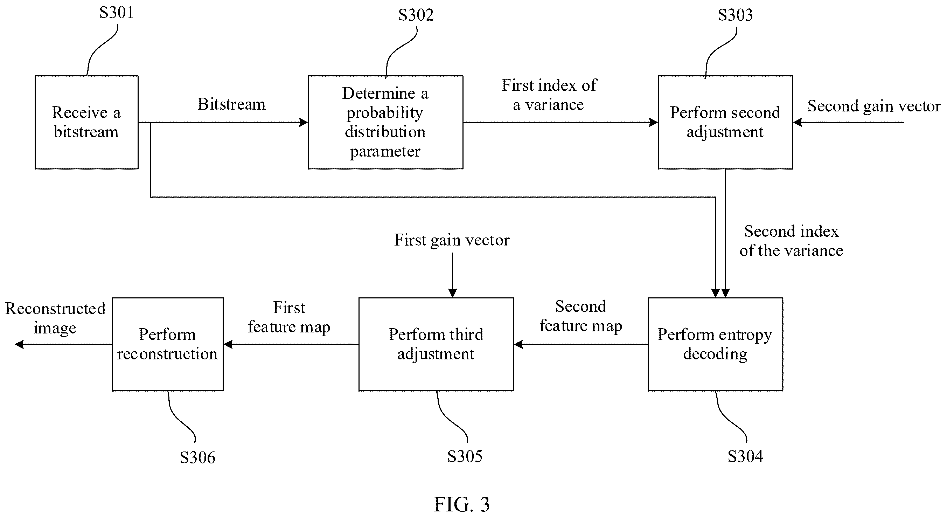

The following describes an encoding/decoding process of an image (which may be an image in video data or an independent image) based on FIG. 2A and with reference to embodiments in FIG. 2B and FIG. 3.

FIG. 2B illustrates an encoding process.

S201: Obtain a to-be-encoded image.

For example, an encoder side may obtain a to-be-encoded image, and then may encode the to-be-encoded image with reference to S202 to S206 to obtain a bitstream.

S202: Perform feature extraction on the to-be-encoded image to obtain a first feature map, where the first feature map includes N feature points.

For example, an encoding network may perform feature extraction on the to-be-encoded image, to transform the to-be-encoded image into another space, thereby reducing temporal redundancy and spatial redundancy of the to-be-encoded image and obtaining the first feature map.

For example, the first feature map $\in R^{c*h*w}$, that is, a size of the first feature map is c*h*w, where "c" represents a quantity of channels of the first feature map, "h" represents a height of a feature map output by each channel, and "w" represents a width of the feature map output by each channel. In other words, the first feature map includes feature maps of c channels, a feature map of each channel may include h*w feature points, the first feature map may include N feature points, each feature point has one feature value, N is a product of c, h, and w, and c, h, and w are all positive integers. Feature values of the N feature points in the first feature map may be referred to as first feature values.

S203: Determine a probability distribution parameter corresponding to the first feature map, where the probability distribution parameter includes N first indexes, the N first indexes one-to-one correspond to N variances, and the N variances one-to-one correspond to the N feature points.

In a possible manner, refer to FIG. 2A. The first feature map may be input into the entropy estimation network to obtain the probability distribution parameter that corresponds to the first feature map and that is output by the entropy estimation network.

In a possible manner, feature extraction may be performed on the first feature map to obtain a third feature map; and the third feature map is input into the entropy estimation network to obtain the probability distribution parameter that corresponds to the first feature map and that is output by the entropy estimation network. A size of the third feature map is the same as the size of the first feature map.

In a possible manner, a feature map obtained by performing adjustment and quantization on the first feature map may be input into the entropy estimation network to obtain the probability distribution parameter that corresponds to the first feature map and that is output by the entropy estimation network. A size of the feature map obtained through adjustment and quantization is the same as the size of the first feature map.

In other words, in this application, the first feature map may be directly input into the entropy estimation network, or the feature map obtained by processing the first feature map may be input into the entropy estimation network to obtain the probability distribution parameter corresponding to the first feature map. This is not limited in this application.

For example, the entropy estimation network may process an input feature map (for example, the first feature map or the third feature map) to obtain estimation information; and then perform probability estimation based on the estimation information, to determine the probability distribution parameter corresponding to the first feature map. For example, when the entropy estimation network is a hyperprior network, the estimation information may be hyperprior information.

For example, the probability distribution parameter corresponding to the first feature map may include an index (index, where one index is used to uniquely identify one variance; for ease of description, referred to as a first index below) of a variance corresponding to each of the N feature points of the first feature map. It should be understood that the probability distribution parameter may further include another parameter. This is not limited in this application.

S204: Perform first adjustment on the first feature map based on a first gain vector to obtain a second feature map.

For example, different gain vectors may be preset for different target bit rates to obtain a gain vector set $M = [M_1, M_2,...,M_g]$. The gain vector set M may include g gain vectors, a size of each gain vector is c*1, and g is a positive integer.

For example, the first adjustment is a multiplication operation. It should be noted that the multiplication operation may include two types of calculations: "multiplication" and "division". In this application, an example in which the first adjustment is "multiplication" is used for description.

For example, a corresponding gain vector may be selected from the gain vector set M based on a current target bit rate, and is used as the first gain vector. Then, the first adjustment is performed on the first feature map based on the first gain vector to obtain the second feature map.

Specifically, for each channel of the first feature map, a first feature value of each of the h*w feature points included in the channel is multiplied by a gain that is in the first gain vector and that corresponds to the channel to obtain a second feature value of the feature point. In this way, second feature values of the N feature points may be obtained, and the second feature values of the N feature points may form the second feature map. For example, the second feature map $\in R^{c*h*w}$, and the second feature map may include the second feature values of the N feature points.

For example, in the embodiment in FIG. 2B, one feature point in one first feature map is used as an example. For a manner of performing the first adjustment on a first feature value of the feature point based on the first gain vector to obtain a second feature value, refer to the following formula (1):

$$ y_2\left(c_i, h_j, w_k\right) = y_1\left(c_i, h_j, w_k\right) * M_{bc_i} \qquad (1) $$

In the formula (1), $y_2(c_i, h_j, w_k)$ represents a second feature value of a feature point $(c_i, h_j, w_k)$, $M_{bc_i}$ is a gain that is in the first gain vector and that corresponds to a channel $c_i$, and $y_1(c_i, h_j, w_k)$ represents a first feature value of the feature point $(c_i, h_j, w_k)$. Herein, $c_i$ is a positive integer less than or equal to c, $h_j$ is a positive integer less than or equal to h, $w_k$ is a positive integer less than or equal to w, and b is a positive integer less than or equal to g.

It can be learned from the formula (1) that a larger vector in the first gain vector indicates a larger step. In this way, first feature values of more feature points are adjusted to a same feature value, to implement an AI compression framework with different bit rates.

For example, rounding (that is, quantization) may be further performed on the second feature values of the N feature points. In this case, the formula (1) may be converted into a formula (2):

$$ y_2\left(c_i, h_j, w_k\right) = \left[ y_1\left(c_i, h_j, w_k\right) * M_{bc_i} \right] \qquad (2) $$

In the formula (2), [ ] represents rounding.

It should be understood that a gain vector set $M = [M_1^{-1}, M_2^{-1}, ......, M_g^{-1}]$. In this case, in a process of performing the first adjustment on the first feature map based on the first gain vector, the first feature value of the feature point in the channel $c_i$ may be divided by the gain that is in the first gain vector and that corresponds to the channel $c_i$. This is not limited in this application. An example $M = [M_1,M_2,.......,M_g]$ is used for description in this application.

In a possible manner, the probability distribution parameter may further include N mean values, and the N mean values one-to-one correspond to the N feature points. In this case, a first feature value of each of the N feature points in the first feature map may be subtracted by a corresponding mean value to obtain a fourth feature value of each feature point. Fourth feature groups of the N feature points may form a fourth feature map. For details, refer to the following formula (3):

$$r_4\left(c_i,h_j,w_k\right) = y_1\left(c_i,h_j,w_k\right) - \mu\left(c_i,h_j,w_k\right) \qquad (3)$$

In the formula (3), $y_1(c_i,h_j,w_k)$ represents the first feature value of the feature point $(c_i,h_j,w_k)$, $r_4(c_i,h_j,w_k)$ represents a fourth feature value of the feature point $(c_i,h_j,w_k)$, and $\mu(c_i,h_j,w_k)$ represents a mean value corresponding to the feature point $(c_i,h_j,w_k)$.

Then, the first adjustment may be performed on the fourth feature map based on the first gain vector to obtain the second feature map, and rounding is performed on the second feature values of the N feature points in the second feature map. For details, refer to a formula (4):

$$y_2\left(c_i,h_j,w_k\right) = r_4\left(c_i,h_j,w_k\right) * M_{bc_i} \qquad (4)$$

In the formula (4), $y_2(c_i,h_j,w_k)$ represents the second feature value of the feature point $(c_i,h_j,w_k)$, $r_4(c_i,h_j,w_k)$ represents the fourth feature value of the feature point $(c_i,h_j,w_k)$, and $M_{bc_i}$ is the gain that is in the first gain vector and that corresponds to the channel $c_i$.

S204 may be performed by the first adjustment module.

It should be noted that an execution sequence of S203 and S204 is not limited in this application.

S205: Perform second adjustment on the N first indexes based on a second gain vector to obtain N second indexes, where the second gain vector is obtained by converting the first gain vector to a logarithm domain, a size of the second gain vector is c*1, the second adjustment is an addition operation, and the N second indexes one-to-one correspond to the N feature points.

For example, the gain vector set M may be converted to the log domain (the logarithm domain) in advance to obtain a gain vector set $M^l = [m_1^l,m_2^l,.......,m_g^l]$. For a manner of converting a gain in a gain vector in the gain vector set to the log domain, refer to the following formula (5):

$$M_{dc_i}^{\ l} = \frac{\log\left(M_{dc_i}\right)}{\log\left(\sigma_{max}\right) - \log\left(\sigma_{min}\right)} * \left(L-1\right) \qquad (5)$$

In the formula (5), $M_{dc_i}$ is a gain that is in a $d^{th}$ gain vector in the gain vector set M and that corresponds to the channel $c_i$, $M_{dc_i}^{\ l}$ is a gain that is in a $d^{th}$ gain vector in the gain vector set $M^l$ and that corresponds to the channel $c_i$, $\sigma_{max}$ is a maximum value of available variances, for example, 0.11, $\sigma_{min}$ is a minimum value of the available variances, for example, 100, d is a positive integer less than or equal to g, and L is a total quantity of indexes of the available variances.

It should be noted that the addition operation may include two types of calculations: "addition" and "subtraction". In the embodiment in FIG. 2B, when the first adjustment is "multiplication", the second adjustment is "addition"; or when the first adjustment is "division", the second adjustment is "subtraction". In this application, an example in which the second adjustment is "addition" is used for description.

For example, in the embodiment in FIG. 2B, one feature point is used as an example. For a manner of performing the second adjustment on a first index of a variance corresponding to the feature point based on the second gain vector to obtain a second index of the variance corresponding to the feature point, refer to the following formula (6):

$$\text{index}_2\left(c_i,h_j,w_k\right) = \text{index}_1\left(c_i,h_j,w_k\right) + M_{bc_i}^{\ l} \qquad (6)$$

In the formula (6), $index_2(c_i,h_j,w_k)$ represents a second index of a variance corresponding to the feature point $(c_i,h_j,w_k)$, $index_1(c_i,h_j,w_k)$ represents a first index of the variance corresponding to the feature point $(c_i,h_j,w_k)$, and $M_{bc_i}^{\ l}$ is a gain that is in the second gain vector and that corresponds to the channel $c_i$.

Then, rounding may be further performed on the second index. In this case, the formula (6) may be converted into

a formula (7):

$$\text{index}_2\left(c_i, h_j, w_k\right) = \left[\text{index}_1\left(c_i, h_j, w_k\right) + M_{bc_i}{}^l\right] \qquad (7)$$

In the formula (7), [ ] represents rounding.

S205 may be performed by the second adjustment module. An execution sequence of S204 and S205 is not limited in this application.

S206: Perform entropy encoding on the second feature map based on the N second indexes to obtain a bitstream.

Then, the entropy encoding module may determine, based on the N second indexes, probability distribution tables corresponding to the N feature points, and then may perform the entropy encoding on the second feature values of the N feature points in the second feature map (that is, perform the entropy encoding on the second feature map) based on the probability distribution tables corresponding to the N feature points to obtain the bitstream. In this way, the obtained bitstream may include encoded data of the N feature points in the second feature map.

In addition, the estimation information may be written into the bitstream and transmitted to a decoder side, so that an entropy estimation network on the decoder side can determine the probability distribution parameter corresponding to the first feature map based on the estimation information.

For example, the encoder side may further include a bitstream transmission apparatus. The bitstream transmission apparatus may include a transmitter and at least one storage medium. The at least one storage medium is configured to store the bitstream generated in the embodiment in FIG. 2B. The transmitter is configured to: obtain the bitstream from the storage medium, and send the bitstream to a device-side device through a transmission medium.

For example, after generating the bitstream, the encoder side may send the bitstream to a bitstream delivery system. The bitstream delivery system may include at least one storage medium and a streaming media device. The storage medium is configured to store at least one bitstream generated in the embodiment in FIG. 2B. The streaming media device is configured to: obtain a target bitstream from the at least one storage medium, and send the target bitstream to a device-side device, where the streaming media device includes a content server or a content delivery server.

FIG. 3 illustrates a decoding process. The decoding process in FIG. 3 corresponds to the encoding process in FIG. 2B.

For example, a decoder side may include a bitstream storage apparatus. The bitstream storage apparatus may include a receiver and at least one storage medium, where the receiver is configured to receive a bitstream, and the at least one storage medium is configured to store the bitstream. Then, the bitstream may be decoded with reference to S302 to S306.

S301: Receive a bitstream.

For example, the bitstream may include encoded data of N feature points in a second feature map and encoded data of estimation information.

S302: Determine a probability distribution parameter corresponding to a first feature map, where the probability distribution parameter includes N first indexes, the N first indexes one-to-one correspond to N variances, and the N variances one-to-one correspond to the N feature points.

For example, the entropy decoding module may first perform entropy decoding on the encoded data of the estimation information in the bitstream to obtain the estimation information. Then, the entropy estimation network may perform probability estimation based on the estimation information, to determine the probability distribution parameter corresponding to the first feature map. The probability distribution parameter includes a first index of a variance corresponding to each of the N feature points of the first feature map.

S303: Perform second adjustment on the N first indexes based on a second gain vector to obtain N second indexes, where the N second indexes one-to-one correspond to the N feature points.

For example, for S303, refer to the descriptions of S205. Details are not described herein again. S303 may be performed by the fourth adjustment module.

S304: Perform entropy decoding on the encoded data of the N feature points based on the N second indexes to obtain the second feature map.

For example, the entropy decoding module may determine, based on the N second indexes, probability distribution tables corresponding to the N feature points, and then may perform the entropy decoding on the encoded data of the N feature points in the second feature map in the bitstream based on the probability distribution tables corresponding to the N feature points to obtain the second feature map.

S305: Perform third adjustment on the second feature map based on a first gain vector to obtain the first feature map.

For example, S305 may be performed by the third adjustment module.

It should be noted that the third adjustment in the embodiment in FIG. 3 is an inverse process of the first adjustment in the embodiment in FIG. 2A.

For example, when the first adjustment in S204 is "multiplication", the third adjustment in S305 is "division"; or when the first adjustment in S204 is "division", the third adjustment in S305 is "multiplication". In this application, an example in which the third adjustment is "division" is used for description.

For example, a corresponding gain vector may be selected from a gain vector set M based on a current target bit rate, and is used as the first gain vector. Then, the third adjustment is performed on the second feature map based on the first gain vector to obtain the first feature map.

Specifically, for each channel of the second feature map, a second feature value of each of h*w feature points included in the channel is divided by a gain that is in the first gain vector and that corresponds to the channel to obtain a first feature value of the feature point. In this way, first feature values of N feature points may be obtained, and the first feature values of the N feature points may form the first feature map.

For example, in the embodiment in FIG. 3, one feature point is used as an example. For a manner of performing the third adjustment on a second feature value of the feature point based on the first gain vector to obtain a first feature value of the feature point, refer to the following formula (8):

$$y_1\left(c_i, h_j, w_k\right) = \frac{y_2\left(c_i, h_j, w_k\right)}{M_{bc_i}} \qquad (8)$$

In the formula (8), $y_2(c_i,h_j,w_k)$ represents a second feature value of a feature point $(c_i,h_j,w_k)$, $M_{bc_i}$ is the first gain vector, and $y_1(c_i,h_j,w_k)$ represents a first feature value of the feature point $[c_i,h_j,w_k]$.

When an encoder side performs the first adjustment on a fourth feature map based on the first gain vector to obtain the second feature map, the decoder side performs the third adjustment on the second feature map based on the first gain vector to obtain the fourth feature map. Then, a corresponding mean value may be added to a fourth feature value of each of N feature points of the fourth feature map to obtain the first feature map. For details, refer to the following formula (9):

$$y_1\left(c_i, h_j, w_k\right) = r_4\left(c_i, h_j, w_k\right) + \mu\left(c_i, h_j, w_k\right) \qquad (9)$$

In the formula (9), $y_1(c_i,h_j,w_k)$ represents the first feature value of the feature point $(c_i,h_j,w_k)$, $r_4(c_i,h_j,w_k)$ represents a fourth feature value of the feature point $(c_i,h_j,w_k)$, and $\mu(c_i,h_j,w_k)$ represents a mean value corresponding to the feature point $(c_i,h_j,w_k)$.

S306: Perform reconstruction on the first feature map to obtain a reconstructed image of an image.

Then, the first feature map may be input into the decoding network, and the decoding network performs reconstruction on the first feature map to output the reconstructed image.

Based on the encoding process in the embodiment in FIG. 2B and the decoding process in the embodiment in FIG. 3, it can be learned that, in a process of adjusting a variance before quantization in this application, a multiplication operation between the variance and a gain is converted into an addition operation between an index of the variance and a gain converted to a logarithm domain. In this way, in some cases, a computation amount of variance adjustment can be reduced and efficiency of variance adjustment can be increased while compression performance is ensured, thereby increasing encoding/decoding efficiency. In some other cases, bit rate overheads can be reduced while a computation amount of variance adjustment is reduced and efficiency of variance adjustment is increased (because a process of training an entropy estimation network (namely, an entropy estimation network in the conventional technology) used to output a variance is inconsistent with a process of testing the entropy estimation network, but a process of training an entropy estimation network (namely, an entropy estimation network in this application) used to determine a first index of a variance is consistent with a process of testing the entropy estimation network, bit rate overheads can be reduced in some cases).

In addition, in this application, a probability distribution table one-to-one corresponds to an index of a variance. Further, in an entropy encoding/decoding process, in this application, a corresponding probability distribution table may be directly determined based on a second index, and then entropy encoding/decoding may be performed on a feature value of a feature point in the second feature map based on the probability distribution table. However, in the conventional technology, after adjustment is performed on a variance, a preset variance closest to the variance needs to be searched for from a plurality of preset variances (a probability distribution table one-to-one corresponds to the preset variance). Then, entropy encoding/decoding is performed on the feature value of the feature point in the second feature map based on a probability distribution table corresponding to the preset variance closest to the variance. In the conventional technology, a specific computation amount is required for searching for the preset variance closest to the variance. Therefore, in this application, a computation amount of entropy encoding/decoding can be further reduced, and efficiency of entropy encoding/decoding can be increased.

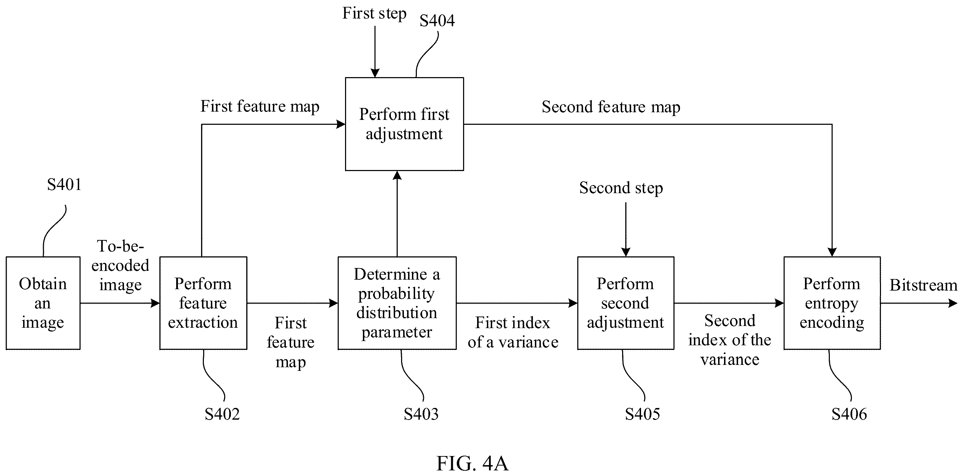

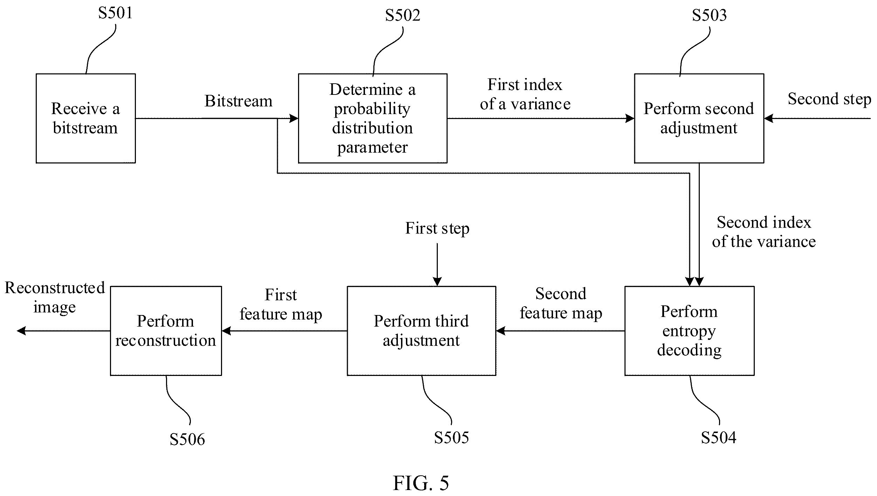

The following describes another encoding/decoding process of an image (which may be a frame of image in video data or an independent image) based on FIG. 2A and with reference to embodiments in FIG. 4A and FIG. 5.

FIG. 4A illustrates an encoding process.

S401: Obtain a to-be-encoded image.

S402: Perform feature extraction on the to-be-encoded image to obtain a first feature map.

S403: Determine a probability distribution parameter corresponding to the first feature map, where the probability distribution parameter includes a first index of a variance.

For example, for S401 to S403, refer to the descriptions of S201 to S203. Details are not described herein again.

S404: Perform first adjustment on the first feature map based on a first step to obtain a second feature map.

For example, S404 may be performed by the first adjustment module.

For example, the first step may be preset based on factors such as an image quality requirement, a bit rate requirement, and channel quality. In this way, after the first feature map is obtained, the first adjustment module may perform the first adjustment on the first feature map based on the first step to obtain the second feature map.

For example, a mask (mask) map corresponding to the first feature map may be first generated, and then the first adjustment is performed on the first feature map based on the mask map corresponding to the first feature map and the first step to obtain the second feature map. The mask map may also be referred to as a binary mask map, and is used to extract a region of interest and mask a region of uninterest. A size of the mask map corresponding to the first feature map is the same as a size of the first feature map. The mask map corresponding to the first feature map may include a mask value corresponding to each of N feature points of the first feature map. A mask value corresponding to one feature point is either 1 or 0. The first feature map is multiplied by the mask map corresponding to the first feature map. A feature point corresponding to the mask value 1 is extracted, and the first adjustment and second adjustment are performed on the extracted feature point. A feature point corresponding to the mask value 0 is masked.

For example, the mask map corresponding to the first feature map may be generated based on N first indexes corresponding to the N feature points in the first feature map. For example, the first feature map may be first divided into S feature blocks, where S is a positive integer. Then, pooling is performed on Z first indexes corresponding to Z feature points included in the S feature blocks to obtain S pooled values corresponding to the S feature blocks, where Z is a product of Ll, L2, and S. Then, the mask map corresponding to the first feature map is generated based on the S pooled values corresponding to the S feature blocks and a threshold converted to a logarithm domain.

Specifically, a feature map of each channel in the first feature map may be divided into p feature blocks whose sizes are L1*L2. In this way, the first feature map may be divided into S (S=p*c) feature blocks. L1 and L2 may be equal or unequal. This is not limited in this application. Then, for a feature block, pooling may be performed on first indexes of variances corresponding to Y feature points included in the feature block to obtain a pooled value corresponding to the feature block. For a specific pooling process, refer to the following formula (10):

$$
index_q = \begin{cases} MaxPool\left(pooling\_block\_size, index\right), pooling\_\mathrm{mod}\,e = 0; \\ AvgPool\left(pooling\_block\_size, index\right), pooling\_\mathrm{mod}\,e = 1; \\ MinPool\left(pooling\_block\_size, index\right), pooling\_\mathrm{mod}\,e = 2. \end{cases} \qquad (10)
$$

In the formula (10), $index_q$ represents a pooled value corresponding to a $q^{th}$ feature block, and q is a positive integer less than or equal to M.

In the formula (10), *MaxPool* represents maximum pooling, *pooling_block_size* represents a size of the feature block, that is, L1*L2, *index* represents a first index of a variance, and a meaning of *MaxPool(pooling_block_size,index)* is as follows: Maximum pooling is performed on first indexes of variances corresponding to Y (Y is equal to L1 multiplied by L2) feature points included in the feature block whose size is L1*L2, that is, a maximum value of the first indexes of the variances in the Y feature points is selected as the pooled value corresponding to the feature block.

In the formula (10), *AvgPool* represents average pooling, and a meaning of *AvgPool(pooling_block_size,index)* is as follows: Average pooling is performed on first indexes of variances corresponding to Y feature points included in the feature block whose size is L1*L2, that is, a mean value of the first indexes of the variances corresponding to the Y feature points is calculated as the pooled value corresponding to the feature block.

In the formula (10), *MinPool* represents minimum pooling, and a meaning of *MinPool(pooling_block_size,index)* is as follows: Minimum pooling is performed on first indexes of variances corresponding to Y feature points included in the feature block whose size is L1*L2, that is, a minimum value of the first indexes of the variances in the Y feature points is selected as the pooled value corresponding to the feature block.

In the formula (10), *pooling_mode* = 0, *pooling_mode* = 1, and *pooling_mode* = 2 correspond to three pooling policies that may be specifically determined based on a target bit rate. This is not limited in this application.

In this way, the S pooled values may be obtained. The S pooled values one-to-one correspond to the S feature blocks.

Then, the mask map corresponding to the first feature map is generated based on the S pooled values corresponding to the S feature blocks and the threshold converted to the logarithm domain. Specifically, a threshold may be preset, and the threshold is converted to the logarithm domain.

Specifically, the threshold may be converted to the logarithm domain according to a formula (11):

$$\text{th}reshold^{\log} = \frac{\log(\text{th}reshold) - \log(\sigma_{\min})}{\log(\sigma_{\max}) - \log(\sigma_{\min})} * (L-1) * \eta \qquad (11)$$

In the formula (11), *threshold* is a threshold set based on a variance, th$reshold^{\log}$ is the threshold converted to the logarithm domain, $\sigma_{\max}$ is a maximum value of available variances, and $\sigma_{\min}$ is a minimum value of the available variances.

It should be noted that, when the pooled value is obtained through average pooling, a mean value obtained by converting the variances to the log domain is less than a mean value of $\sigma$. Therefore, $\eta$ may be a positive number less than 1, for example, 0.85. In this way, it can be ensured that a mask map determined based on the first index of the variance is the same as or similar to a mask map determined based on the variance, thereby ensuring that compression performance remains unchanged. When the pooled value is obtained through maximum pooling or minimum pooling, $\eta$ may be 1.

Then, the S pooled values corresponding to the S feature blocks may be compared with the threshold converted to the logarithm domain, to generate the mask map corresponding to the first feature map. For details, refer to the following formula (12):

$$mask_q(c_i,h_j,w_k) = \begin{cases} True \text{ if } index_q(c_i,h_j,w_k) > \text{threshold}^{\log} \cap greater\_flag == True; \\ True \text{ if } index_q(c_i,h_j,w_k) < \text{threshold}^{\log} \cap greater\_flag == False; \\ False \qquad\qquad\qquad otherwise \end{cases} (12)$$

In the formula (12), $mask_q(c_i,h_j,w_k)$ represents a mask value corresponding to a feature point $(c_i,h_j,w_k)$ included in the q$^{th}$ feature block. *greater_flag* may be set as required, for example, "0" or "1". $index_q(c_i,h_j,w_k)$ represents a pooled value of a first index of a variance corresponding to the feature point $(c_i,h_j,w_k)$ included in the q$^{th}$ feature block, namely, a pooled value corresponding to the q$^{th}$ feature block.

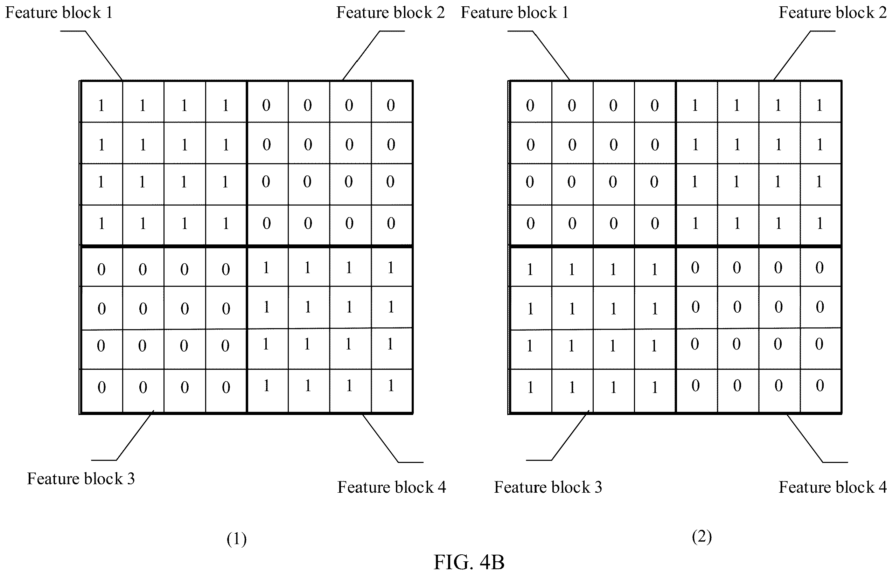

For example, when *greater_flag = 1*, if $index_q(c_i,h_j,w_k)$ is greater than threshold$^{\log}$, the mask value corresponding to the feature point $(c_i,h_j,w_k)$ included in the q$^{th}$ feature block is 1; otherwise, the mask value corresponding to the feature point $(c_i,h_j,w_k)$ included in the q$^{th}$ feature block is 0. In this way, the mask map corresponding to the first feature map may be shown in (1) in FIG. 4B. (1) in FIG. 4B is a mask map corresponding to a feature map (whose size is 8*8) of a channel of the first feature map, and a size of a feature block is 4*4. Mask values corresponding to all feature points included in a feature block 1 are 1, mask values corresponding to all feature points included in a feature block 2 are 0, mask values corresponding to all feature points included in a feature block 3 are 0, and mask values corresponding to all feature points included in a feature block 4 are 1.

For example, when *greater_flag* = 0, if $index_q(c_i,h_j,w_k)$ is less than threshold$^{\log}$, the mask value corresponding to the feature point $(c_i,h_j,w_k)$ included in the q$^{th}$ feature block is 1; otherwise, the mask value corresponding to the feature point $(c_i,h_j,w_k)$ included in the q$^{th}$ feature block is 0. In this way, the mask map corresponding to the first feature map may be shown in (2) in FIG. 4B. (2) in FIG. 4B is a mask map corresponding to a feature map (whose size is 8*8) of a channel of the first feature map, and a size of a feature block is 4*4. Mask values corresponding to all feature points included in a feature block 1 are 0, mask values corresponding to all feature points included in a feature block 2 are 1, mask values corresponding to all feature points included in a feature block 3 are 1, and mask values corresponding to all feature points included in a feature block 4 are 0.

Then, the first adjustment may be performed on the first feature map based on the mask map corresponding to the first feature map and the first step to obtain the second feature map. Specifically, for each of the N feature points of the first feature map, when a mask value corresponding to the feature point is 1, the first adjustment may be performed on a first feature value of the feature point based on the first step; or when a mask value corresponding to the feature point is 0, the first adjustment may not be performed on a first feature value of the feature point.

In the embodiment in FIG. 4A, the first adjustment is a multiplication operation. It should be noted that the multiplication operation may include two types of calculations: "multiplication" and "division". In this application, an example in which the first adjustment is "multiplication" is used for description. Specifically, one feature point is used as an example. For a process of performing the first adjustment on a first feature value of the feature point based on the first step to obtain a second feature value of the feature point, refer to the following formula (13):

$$y_2\left(c_i, h_j, w_k\right) = y_1\left(c_i, h_j, w_k\right) * scale \qquad (13)$$

In the formula (13), $y_2(c_i, h_j, w_k)$ represents a second feature value of the feature point $(c_i, h_j, w_k)$, *scale* is the first step, and $y_1(c_i, h_j, w_k)$ represents a first feature value of the feature point $(c_i, h_j, w_k)$.

For example, rounding may be further performed on second feature values of the N feature points. In this case, the formula (14) may be converted into a formula (14):

$$y_2\left(c_i, h_j, w_k\right) = \left[\, y_1\left(c_i, h_j, w_k\right) * scale \,\right] \qquad (14)$$

In the formula (14), [ ] represents rounding.

It should be understood that, in the embodiment in FIG. 4A, the probability distribution parameter may further include N mean values in the first feature map, and the N mean values one-to-one correspond to the N feature points. In this case, the first feature value of each of the N feature points in the first feature map may be subtracted by a corresponding mean value to obtain a fourth feature map. Then, the first adjustment may be performed on the fourth feature map based on the mask map corresponding to the first feature map and the first step to obtain the second feature map. For details, refer to the foregoing descriptions. Details are not described herein again.

S405: Perform second adjustment on the N first indexes based on a second step to obtain N second indexes, where the second step is obtained by converting the first step to a logarithm domain, and the N second indexes one-to-one correspond to the N feature points.

For example, S405 may be performed by the second adjustment module.

For example, in the embodiment in FIG. 4A, the second adjustment is an addition operation. It should be noted that the addition operation may include two types of calculations: "addition" and "subtraction". In the embodiment in FIG. 4A, when the first adjustment is "multiplication", the second adjustment is "addition"; or when the first adjustment is "division", the second adjustment is "subtraction". In this application, an example in which the second adjustment is "addition" is used for description.

For example, the first step may be first converted to the logarithm domain to obtain the second step. For details, refer to the following formula (15):

$$scale^{\log} = \frac{\log\left(scale\right)}{\log\left(\sigma_{\max}\right) - \log\left(\sigma_{\min}\right)} * \left(L - 1\right) \qquad (15)$$

In the formula (15), *scale* is the first step, $scale^{\log}$ is the second step, $\sigma_{\max}$ is the maximum value of the available variances, and $\sigma_{\min}$ is the minimum value of the available variances.

Then, the second adjustment may be performed on the N first indexes based on the mask map corresponding to the first feature map and the second step to obtain the N second indexes. Specifically, for each of the N feature points of the first feature map, when a mask value corresponding to the feature point is 1, the second adjustment may be performed on a first index of a variance corresponding to the feature point based on the second step; or when a mask value corresponding to the feature point is 0, the second adjustment may not be performed on a first feature value of a variance corresponding to the feature point.

Specifically, one feature point is used as an example. For a manner of performing the second adjustment on a first index of a variance corresponding to the feature point based on the second step to obtain a second index of the variance corresponding to the feature point, refer to the following formula (16):

$$index_2\left(c_i, h_j, w_k\right) = index_1\left(c_i, h_j, w_k\right) + scale^{\log} \qquad (16)$$

In the formula (16), $index_2(c_i, h_j, w_k)$ represents a second index of a variance corresponding to the feature point $(c_i, h_j, w_k)$, $scale^{\log}$ is the second step, and $index_1(c_i, h_j, w_k)$ represents a first index of the variance corresponding to the feature point $(c_i, h_j, w_k)$.

Then, rounding may be further performed on the second index. In this case, the formula (16) may be converted into a formula (17):

$$index_2\left(c_i,h_j,w_k\right)=\left[index_1\left(c_i,h_j,w_k\right)+scale^{\log}\right] \qquad (17)$$

In the formula (17), [ ] represents rounding.

S406: Perform entropy encoding on the second feature map based on the N second indexes to obtain a bitstream.

For example, for S406, refer to the descriptions of S206. Details are not described herein again.

FIG. 5 illustrates a decoding process. The decoding process in FIG. 5 corresponds to the encoding process in FIG. 4A.

S501: Receive a bitstream.

S502: Determine a probability distribution parameter corresponding to a first feature map, where the probability distribution parameter includes N first indexes, the N first indexes one-to-one correspond to N variances, and the N variances one-to-one correspond to N feature points.

For example, for S501 and S502, refer to the descriptions of S301 and S302. Details are not described herein again.

S503: Perform second adjustment on the N first indexes based on a second step to obtain N second indexes, where the N second indexes one-to-one correspond to the N feature points.

For example, for S503, refer to the descriptions of S405. Details are not described herein again. S503 may be performed by the fourth adjustment module.

S504: Perform entropy decoding on encoded data of the N feature points based on the N second indexes to obtain a second feature map.

For example, for S504, refer to the descriptions of S304. Details are not described herein again.

S505: Perform third adjustment on the second feature map based on a first step to obtain the first feature map.

For example, S505 may be performed by the third adjustment module.

For example, the third adjustment in the embodiment in FIG. 5 is an inverse process of the first adjustment in the embodiment in FIG. 4A.

For example, when the first adjustment in S404 is "multiplication", the third adjustment in S505 is "division"; or when the first adjustment in S404 is "division", the fifth adjustment in S505 is "multiplication". In this application, an example in which the third adjustment is "division" is used for description.

For example, one feature point is used as an example. For a manner of performing the third adjustment on the feature point based on the first step, refer to the following formula (18):

$$y_1\left(c_i,h_j,w_k\right)=\frac{y_2\left(c_i,h_j,w_k\right)}{scale} \qquad (18)$$

In the formula (18), $y_2(c_i,h_j,w_k)$ represents a second feature value of a feature point $(c_i,h_j,w_k)$, *scale* is the first step, and $y_1(c_i,h_j,w_k)$ represents a first feature value of the feature point $(c_i,h_j,w_k)$.

When an encoder side performs the first adjustment on a fourth feature map based on the first step to obtain the second feature map, a decoder side performs the third adjustment on the second feature map based on the first step to obtain the fourth feature map. Then, a corresponding mean value may be added to a fourth feature value of each of N feature points of the fourth feature map to obtain the first feature map. For details, refer to the foregoing formula (9). Details are not described herein again.

S506: Perform reconstruction on the first feature map to obtain a reconstructed image of an image.

For example, for S506, refer to the descriptions of S306. Details are not described herein again.

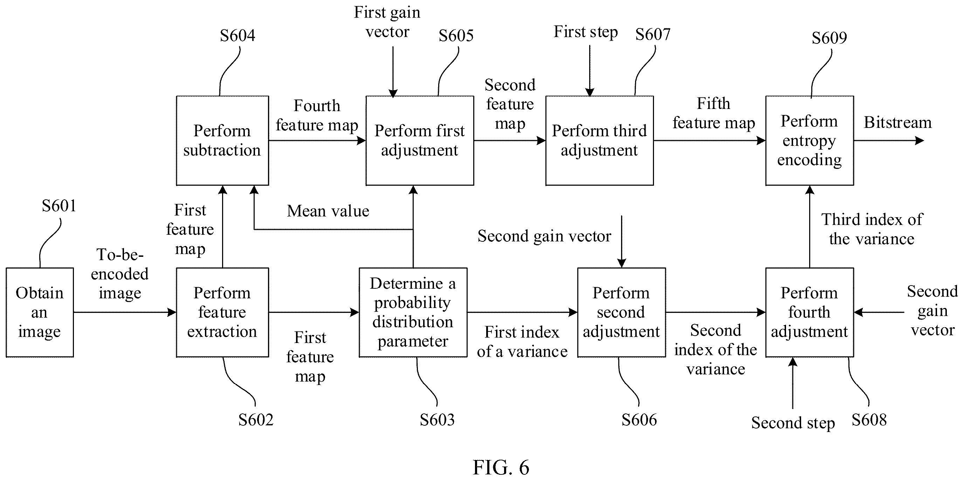

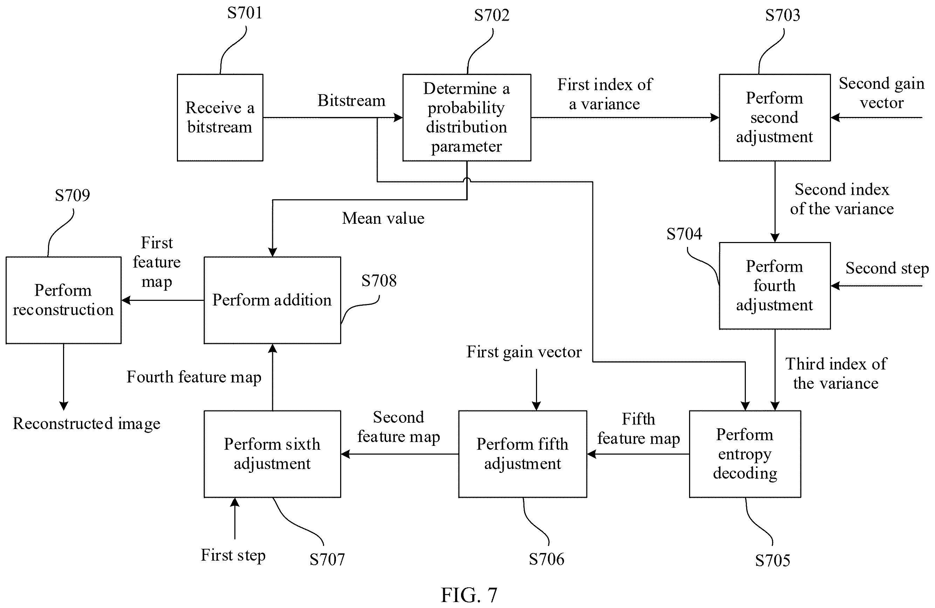

The following describes another encoding/decoding process of an image (which may be a frame of image in video data or an independent image) based on FIG. 2A and with reference to embodiments in FIG. 6 and FIG. 7.

FIG. 6 illustrates an encoding process.

S601: Obtain a to-be-encoded image.

S602: Perform feature extraction on the to-be-encoded image to obtain a first feature map.

S603: Determine a probability distribution parameter corresponding to the first feature map, where the probability distribution parameter includes N first indexes and N mean values, the N mean values one-to-one correspond to N feature points, the N first indexes one-to-one correspond to N variances, and the N variances one-to-one correspond to the N feature points.

For example, for S601 to S603, refer to the descriptions of S201 to S203. Details are not described herein again.

S604: Subtract a corresponding mean value from a first feature value of each of the N feature points of the first feature map to obtain a fourth feature map.

For example, the fourth feature map includes fourth feature values of the N feature points, and the fourth feature value is shown by $r_4[c_i, h_j, w_k]$ in the foregoing formula (3). Details are not described herein again.

S605: Perform first adjustment on the fourth feature map based on a first gain vector to obtain a second feature map.

For example, the first adjustment in S605 is the same as the first adjustment in S204. Details are not described herein again.

For example, the fourth feature map includes the fourth feature values of the N feature points, and a manner of computing the fourth feature value may be shown in the following formula (19):

$$r_2\left(c_i, h_j, w_k\right) = r_4\left(c_i, h_j, w_k\right) * M_{bc_i} \qquad (19)$$

In the formula (19), $r_2(c_i, h_j, w_k)$ represents a second feature value of a feature point $(c_i, h_j, w_k)$, $r_5(c_i, h_j, w_k)$ represents a fourth feature value of the feature point $[c_i, h_j, w_k]$, and $m_b$ is the first gain vector.

S606: Perform second adjustment on the N first indexes based on a second gain vector to obtain N second indexes.

For example, the second adjustment in S606 is the same as the second adjustment in S205. Details are not described herein again.

S607: Perform third adjustment on the second feature map based on a first step to obtain a fifth feature map.

For example, the third adjustment in S607 is the same as the first adjustment in S404. Details are not described herein again.

For example, the fifth feature map includes fifth feature values of the N feature points, and a manner of computing the fifth feature value may be shown in the following formula (20):

$$r_5\left(c_i, h_j, w_k\right) = r_2\left(c_i, h_j, w_k\right) * scale \qquad (20)$$

In the formula (20), $r_2((c_i, h_j, w_k)$ represents the second feature value of the feature point $(c_i, h_j, w_k)$, $r_5(c_i, h_j, w_k)$ represents a fifth feature value of the feature point $(c_i, h_j, w_k)$, and *scale* is the first step.

For example, rounding may be further performed on the fifth feature value of the feature point. In this case, the formula (20) may be converted into a formula (21):

$$r_5\left(c_i, h_j, w_k\right) = \left[ r_2\left(c_i, h_j, w_k\right) * scale \right] \qquad (21)$$

In the formula (21), [ ] represents rounding.

S608: Perform fourth adjustment on the N second indexes based on a second step to obtain N third indexes.

For example, the fourth adjustment in S608 is the same as the second adjustment in S405. Details are not described herein again.

For example, a manner of computing the third index may be shown in the following formula (22):

$$index_3\left(c_i, h_j, w_k\right) = index_2\left(c_i, h_j, w_k\right) + scale^{\log} \qquad (22)$$

In the formula (22), $index_3(c_i, h_j, w_k)$ represents a third index of a variance corresponding to the feature point $(c_i, h_j, w_k)$, $scale^{\log}$ is the second step, and $index_2(c_i, h_j, w_k)$ represents a second index of the variance corresponding to the feature point $(c_i, h_j, w_k)$.

Then, rounding may be further performed on the third index. In this case, the formula (22) may be converted into a formula (23):

$$index_3\left(c_i, h_j, w_k\right) = \left[ index_2\left(c_i, h_j, w_k\right) + scale^{\log} \right] \qquad (23)$$

In the formula (23), [ ] represents rounding.

Before S607 and S608 are performed, a mask map corresponding to the first feature map may be generated based on the N second indexes. Specifically, the first feature map may be divided into S feature blocks, where S is a positive integer. Pooling is performed on Z second indexes corresponding to Z feature points included in the S feature blocks to obtain S pooled values corresponding to the S feature blocks. The mask map corresponding to the first feature map is generated based on the S pooled values corresponding to the S feature blocks and a threshold converted to a logarithm domain.

It should be understood that an execution sequence of S605, S606, S607, and S608 is not limited in this application.

S609: Perform entropy encoding on the fifth feature map based on the N third indexes to obtain a bitstream.

For example, for S609, refer to the descriptions of S306. Details are not described herein again.

FIG. 7 illustrates a decoding process. The decoding process in FIG. 7 corresponds to the encoding process in FIG. 6.

S701: Receive a bitstream.

For example, the bitstream may include encoded data of a fifth feature map (which is obtained by performing entropy encoding on a fourth feature map (namely, a fifth feature map) obtained through first adjustment, third adjustment, and rounding are performed) and encoded data of estimation information.

S702: Determine a probability distribution parameter corresponding to a first feature map, where the probability distribution parameter includes N first indexes and N mean values, the N first indexes one-to-one correspond to N variances, the N variances one-to-one correspond to N feature points, and the N mean values one-to-one correspond to the N feature points.

For example, for S701 and S702, refer to the descriptions of S301 and S302. Details are not described herein again.

S703: Perform second adjustment on the N first indexes based on a second gain vector to obtain N second indexes, where the N second indexes one-to-one correspond to the N feature points.

S704: Perform fourth adjustment on the N second indexes based on a second step to obtain N third indexes, where the N third indexes one-to-one correspond to the N feature points.

For example, for S703 and S704, refer to the descriptions of S604 and S608. Details are not described herein again.

It should be noted that an execution sequence of S703 and S704 is not limited in this application.

S705: Perform entropy decoding on the encoded data of the fifth feature map in the bitstream based on the N third indexes to obtain the fifth feature map.

For example, for S705, refer to the descriptions of S304. Details are not described herein again.

S706: Perform fifth adjustment on the fifth feature map based on a first gain vector to obtain a second feature map.

For example, the fifth adjustment in S706 is the same as the third adjustment in S305. Details are not described herein again.

For example, the second feature map includes second feature values of the N feature points, and a manner of computing a fourth feature value may be shown in the following formula (24):

$$r_2\left(c_i,h_j,w_k\right)=\frac{r_5\left(c_i,h_j,w_k\right)}{M_{bc_i}} \qquad (24)$$

In the formula (24), $r_2(c_i,h_j,w_k)$ represents a second feature value of a feature point $(c_i,h_j,w_k)$, $r_5(c_i,h_j,w_k)$ represents a fifth feature value of the feature point $(c_i,h_j,w_k)$, and $M_{bc_i}$ is the first gain vector.

S707: Perform sixth adjustment on the second feature map based on the first step to obtain a fourth feature map.

For example, the sixth adjustment in S707 is the same as the third adjustment in S505. Details are not described herein again.

For example, the fourth feature map includes fourth feature values of the N feature points, and a manner of computing the fourth feature value may be shown in the following formula (25):

$$r_4\left(c_i,h_j,w_k\right)=\frac{r_2\left(c_i,h_j,w_k\right)}{scale} \qquad (25)$$

In the formula (25), $r_4(c_i,h_j,w_k)$ represents a fourth feature value of the feature point $(c_i,h_j,w_k)$, $r_2(c_i,h_j,w_k)$ represents the second feature value of the feature point $(c_i,h_j,w_k)$, and *scale* is the first step.

It should be noted that an execution sequence of S706 and S707 is not limited in this application.

S708: Add a corresponding mean value to a fourth feature value of each of the N feature points of the fourth feature map to obtain the first feature map.

For example, the first feature map includes first feature values of the N feature points, and a manner of computing the first feature value may be shown in the following formula (26):

$$y_1\left(c_i, h_j, w_k\right) = r_4\left(c_i, h_j, w_k\right) + \mu\left(c_i, h_j, w_k\right) \qquad (26)$$

In the formula (26), $r_4(c_i,h_j,w_k)$ represents the fourth feature value of the feature point $(c_i,h_j,w_k)$, $y_1(c_i,h_j,w_k)$ represents a first feature value of the feature point $(c_i,h_j,w_k)$, and $\mu(c_i,h_j,w_k)$ is a mean value corresponding to the feature point $(c_i,h_j,w_k)$.

S709: Perform reconstruction on the first feature map to obtain a reconstructed image of an image.

For example, for S709, refer to the descriptions of S306. Details are not described herein again.

For example, it is tested that, under same quality, a change rate of a bit rate obtained by using the encoding method in FIG. 6 compared with a bit rate obtained by using the encoding method in the conventional technology is -0.26%. In other words, under same quality, a bit rate loss in this application is lower.

Based on the embodiment in FIG. 2B, a first index may be multiplied by $2^f$ (f is a positive integer) to obtain a fourth index. A second gain vector may be multiplied by $2^f$ to obtain a third gain. Then, the fourth index may be subtracted by the third gain to obtain a fifth index. Then, entropy encoding is performed on a second feature map based on the fifth index to obtain a bitstream. In other words, in this application, an operation is performed at an order of magnitude of $2^f$. In the conventional technology, a variance 1 output by an entropy estimation network is first multiplied by $2^{f1}$ (f1 is a positive integer) to obtain a variance 2, and a first gain vector is multiplied by $2^{f2}$ (f2 is a positive integer) to obtain a fourth gain. Then, the variance 2 is multiplied by the fourth gain to adjust the variance. In other words, in the conventional technology, an operation is performed at an order of magnitude of $2^{(f1+f2)}$. It can be learned that an order of magnitude for variance adjustment in this application is small, and therefore, computation memory can be reduced. In addition, a quantization loss after variance adjustment in this application is small, and a bit rate loss is less.

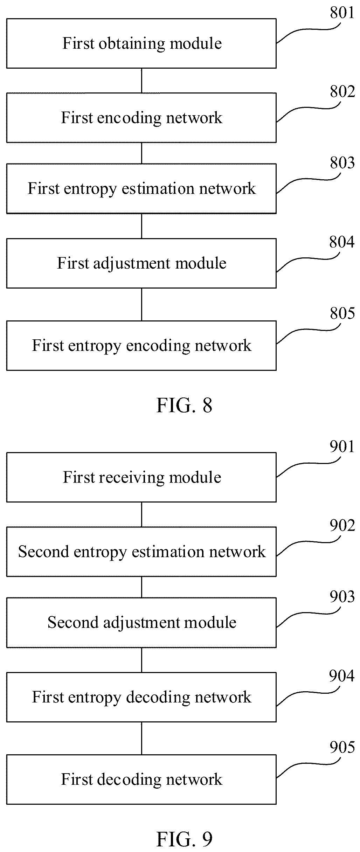

FIG. 8 illustrates an encoding apparatus. The encoding apparatus in FIG. 8 may be configured to perform the methods in the foregoing embodiments. Therefore, for beneficial effects that can be achieved by the encoding apparatus, refer to the beneficial effects in the corresponding methods provided above. Details are not described herein again.

Refer to FIG. 8. The encoding apparatus may include:

a first obtaining module 801, configured to obtain a to-be-encoded image;

a first encoding network 802, configured to perform feature extraction on the to-be-encoded image to obtain a first feature map, where a quantity of channels of the first feature map is c, a height of the first feature map is h, a width of the first feature map is w, the first feature map includes N feature points, N is a product of c, h, and w, and c, h, and w are positive integers;

a first entropy estimation network 803, configured to determine a probability distribution parameter corresponding to the first feature map, where the probability distribution parameter includes N first indexes, the N first indexes one-to-one correspond to N variances, and the N variances one-to-one correspond to the N feature points;

a first adjustment module 804, configured to perform first adjustment on the first feature map based on a first gain vector to obtain a second feature map, where a size of the first gain vector is c*1, and the second feature map includes the N feature points; and

the first adjustment module 805 is further configured to perform second adjustment on the N first indexes based on a second gain vector to obtain N second indexes, where the second gain vector is obtained by converting the first gain vector to a logarithm domain, a size of the second gain vector is c*1, the second adjustment is an addition operation, and the N second indexes one-to-one correspond to the N feature points; and

a first entropy encoding network 806, further configured to perform entropy encoding on the second feature map based on the N second indexes to obtain a bitstream.

FIG. 9 illustrates a decoding apparatus. The decoding apparatus in FIG. 9 may be configured to perform the methods in the foregoing embodiments. Therefore, for beneficial effects that can be achieved by the decoding apparatus, refer to the beneficial effects in the corresponding methods provided above. Details are not described herein again.

Refer to FIG. 9. The decoding apparatus may include:

a first receiving module 901, configured to receive a bitstream, where the bitstream includes encoded data of N feature points in a second feature map, a quantity of channels of the second feature map is c, a height of the second feature map is h, a width of the second feature map is w, N is a product of c, h, and w, and c, h, and w are positive integers;

a second entropy estimation network 902, configured to determine a probability distribution parameter, where the probability distribution parameter includes N first indexes, the N first indexes one-to-one correspond to N variances, and the N variances one-to-one correspond to the N feature points;

a second adjustment module 903, configured to perform an addition operation on the N first indexes based on a second gain vector to obtain N second indexes, where the N second indexes one-to-one correspond to the N feature points;

a first entropy decoding network 904, configured to perform entropy decoding on the encoded data of the N feature points based on the N second indexes to obtain the second feature map;

the second adjustment module 905, further configured to perform adjustment on the second feature map based on a first gain vector to obtain a first feature map, where the second gain vector is obtained by converting the first gain vector to a logarithm domain; and

a first decoding network 906, configured to perform reconstruction on the first feature map to obtain a reconstructed image of an image.

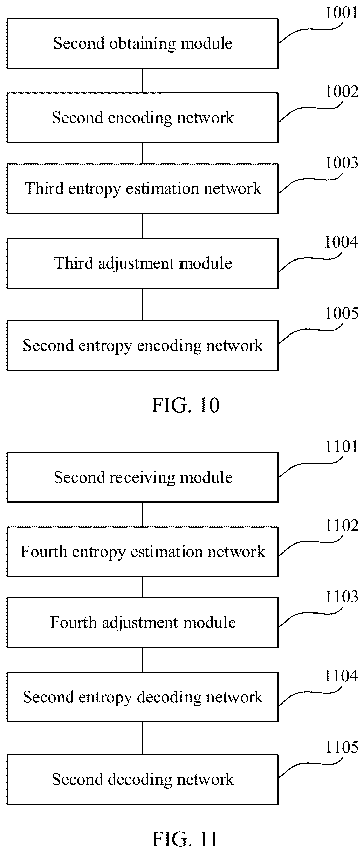

FIG. 10 illustrates an encoding apparatus. The encoding apparatus in FIG. 10 may be configured to perform the methods in the foregoing embodiments. Therefore, for beneficial effects that can be achieved by the encoding apparatus, refer to the beneficial effects in the corresponding methods provided above. Details are not described herein again.

Refer to FIG. 10. The encoding apparatus may include:

a second obtaining module 1001, configured to obtain a to-be-encoded image;

a second encoding network 1002, configured to perform feature extraction on the to-be-encoded image to obtain a first feature map, where a quantity of channels of the first feature map is c, a height of the first feature map is h, a width of the first feature map is w, c, the first feature map includes N feature points, N is a product of c, h, and w, and c, h, and w are positive integers;

a third entropy estimation network 1003, configured to determine a probability distribution parameter corresponding to the first feature map, where the probability distribution parameter includes N first indexes, the N first indexes one-to-one correspond to N variances, and the N variances one-to-one correspond to the N feature points;

a third adjustment module 1004, configured to perform first adjustment on the first feature map based on a first step to obtain a second feature map, where the second feature map includes the N feature points; and

the third adjustment module 1005 is further configured to perform second adjustment on first indexes corresponding to the N feature points based on a second step to obtain N second indexes, where the second step is obtained by converting the first step to a logarithm domain, the second adjustment is an addition operation, and the N second indexes one-to-one correspond to the N feature points; and

a second entropy encoding module 1005, further configured to perform entropy encoding on the second feature map based on the N second indexes to obtain a bitstream.

FIG. 11 illustrates a decoding apparatus. The decoding apparatus in FIG. 11 may be configured to perform the methods in the foregoing embodiments. Therefore, for beneficial effects that can be achieved by the decoding apparatus, refer to the beneficial effects in the corresponding methods provided above. Details are not described herein again.

Refer to FIG. 11. The decoding apparatus may include:

a second receiving module 1101, configured to receive a bitstream, where the bitstream includes encoded data of N feature points in a second feature map, a quantity of channels of the second feature map is c, a height of the second feature map is h, a width of the second feature map is w, N is a product of c, h, and w, and c, h, and w are positive integers;

a fourth entropy estimation network 1102, configured to determine a probability distribution parameter, where the probability distribution parameter includes N first indexes, the N first indexes one-to-one correspond to N variances, and the N variances one-to-one correspond to the N feature points;

a fourth adjustment module 1103, configured to perform an addition operation on the N first indexes based on a second step to obtain N second indexes, where the N second indexes one-to-one correspond to the N feature points;

a second entropy decoding network 1104, configured to perform entropy decoding on the encoded data of the N feature points based on the N second indexes to obtain the second feature map;

the fourth adjustment module 1105, further configured to perform adjustment on the second feature map based on a first step to obtain a first feature map, where the second step is obtained by converting the first step to a logarithm domain, and third adjustment is an inverse process of first adjustment; and

a second decoding network 1106, configured to perform reconstruction on the first feature map to obtain a reconstructed image of an image.

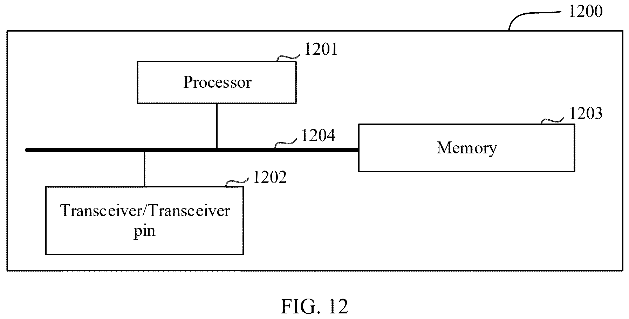

In an example, FIG. 12 is a block diagram of an apparatus 1200 according to an embodiment of this application.

The apparatus 1200 may include a processor 1201 and a transceiver/transceiver pin 1202. Optionally, the apparatus 1200 further includes a memory 1203.

Components of the apparatus 1200 are coupled together through a bus 1204. In addition to a data bus, the bus 1204 further includes a power bus, a control bus, and a status signal bus. However, for clear description, various types of buses in the figure are referred to as the bus 1204.

Optionally, the memory 1203 may be configured to store instructions in the foregoing method embodiments. The processor 1201 may be configured to: execute the instructions in the memory 1203, control a receiving pin to receive a signal, and control a sending pin to send a signal.

The apparatus 1200 may be the electronic device or a chip of the electronic device in the foregoing method embodiments.

All related content of the steps in the foregoing method embodiments may be cited in function descriptions of the corresponding functional modules. Details are not described herein again.

An embodiment of this application further provides a chip, including one or more interface circuits and one or more processors. The one or more processors receive or send data via the one or more interface circuits. When the one or more processors execute computer instructions, steps for implementing the methods in the foregoing embodiments in the foregoing related methods are performed. The interface circuit is a transceiver/transceiver pin 1202.

An embodiment further provides a computer-readable storage medium. The computer-readable storage medium stores computer instructions. When the computer instructions are run on an electronic device, the electronic device is enabled to perform the foregoing related method steps, to implement the methods in the foregoing embodiments.

An embodiment further provides a computer program product. The computer program product includes computer instructions. When the computer instructions are executed by a computer or a processor, the computer is enabled to perform the foregoing related steps, to implement the methods in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the methods in the foregoing method embodiments.

The electronic device, the computer-readable storage medium, the computer program product, or the chip provided in embodiments is configured to perform the corresponding methods provided above. Therefore, for beneficial effects that can be achieved, refer to the beneficial effects of the corresponding methods provided above. Details are not described herein again.

Based on the descriptions of the foregoing implementations, it may be understood by a person skilled in the art that, for ease and brevity of description, division into the foregoing functional modules is merely used as an example for description. During actual application, the foregoing functions may be allocated to different functional modules for implementation based on a requirement, that is, an internal structure of an apparatus is divided into different functional modules, to implement all or a part of the functions described above.

In the several embodiments provided in this application, it should be understood that the disclosed apparatus and method may be implemented in other manners. For example, the described apparatus embodiments are merely examples. For example, division into the modules or units is merely logical function division. During actual implementation, there may be another division manner. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may be one or more physical units. To be specific, the parts may be located in one place, or may be distributed in a plurality of different places. A part or all of the units may be selected based on actual requirements to achieve the objectives of the solutions in embodiments.

In addition, all functional units in embodiments of this application may be integrated into one processing unit, or each of the units may exist alone physically, or two or more units may be integrated into one unit. The integrated unit may be implemented in a form of hardware, or may be implemented in a form of a software functional unit.

Any content in embodiments of this application and any content in a same embodiment may be freely combined. Any combination of the foregoing content shall fall within the scope of this application.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or a part of the technical solutions may be implemented in a form of a software product. The software product is stored in a storage medium and includes several instructions for instructing a device (which may be a single-chip microcomputer, a chip, or the like) or a processor (processor) to perform all or a part of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

Embodiments of this application are described above with reference to the accompanying drawings. However, this application is not limited to the foregoing specific implementations. The foregoing specific implementations are merely examples instead of limitations. Inspired by this application, a person of ordinary skill in the art may further make modifications without departing from the purposes of this application and the protection scope of the claims, and all the modifications shall fall within the protection of this application.

Methods or algorithm steps described in combination with the content disclosed in embodiments of this application may be implemented by hardware, or may be implemented by a processor by executing software instructions. The software instructions may include a corresponding software module. The software module may be stored in a random access memory (Random Access Memory, RAM), a flash memory, a read-only memory (Read-Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be disposed in an ASIC.

A person skilled in the art should be aware that, in the foregoing one or more examples, functions described in embodiments of this application may be implemented by using hardware, software, firmware, or any combination thereof. When the functions are implemented by using software, the functions may be stored in a computer-readable medium or transmitted as one or more instructions or code in a computer-readable medium. The computer-readable medium includes a computer-readable storage medium and a communication medium, where the communication medium includes any medium that enables a computer program to be transmitted from one place to another place. The storage medium may be any available medium accessible to a general-purpose or a dedicated computer.

Embodiments of this application are described above with reference to the accompanying drawings. However, this application is not limited to the foregoing specific implementations. The foregoing specific implementations are merely examples instead of limitations. Inspired by this application, a person of ordinary skill in the art may further make modifications without departing from the purposes of this application and the protection scope of the claims, and all the modifications shall fall within the protection of this application.

**Claims**

1. An encoding method, wherein the method comprises:

   obtaining a to-be-encoded image;
   performing feature extraction on the to-be-encoded image to obtain a first feature map, wherein a quantity of channels of the first feature map is c, a height of the first feature map is h, a width of the first feature map is w, the first feature map comprises N feature points, N is a product of c, h, and w, and c, h, and w are positive integers;
   determining a probability distribution parameter corresponding to the first feature map, wherein the probability distribution parameter comprises N first indexes, the N first indexes one-to-one correspond to N variances, and the N variances one-to-one correspond to the N feature points;
   performing first adjustment on the first feature map based on a first gain vector to obtain a second feature map, wherein the second feature map comprises the N feature points;
   performing second adjustment on the N first indexes based on a second gain vector to obtain N second indexes, wherein the second gain vector is obtained by converting the first gain vector to a logarithm domain, the second adjustment is an addition operation, and the N second indexes one-to-one correspond to the N feature points; and
   performing entropy encoding on the second feature map based on the N second indexes to obtain a bitstream.

2. The method according to claim 1, wherein before performing the entropy encoding on the second feature map based on the N second indexes to obtain the bitstream, the method further comprises:

   performing third adjustment on the second feature map based on a first step; and
   performing fourth adjustment on the N second indexes based on a second step, wherein the second step is obtained by converting the first step to a logarithm domain, and the fourth adjustment is an addition operation.

**3.** The method according to claim 2, wherein the method further comprises:
generating a mask (mask) map corresponding to the first feature map, wherein the mask map is used for the third adjustment and/or the fourth adjustment.

**4.** The method according to claim 3, wherein generating the mask (mask) map of the first feature map comprises:

dividing the first feature map into S feature blocks, wherein a height of the feature block is L1, a width of the feature block is L2, and L1, L2, and S are positive integers;
performing pooling on Z second indexes corresponding to Z feature points comprised in the S feature blocks to obtain S pooled values corresponding to the S feature blocks, wherein Z is a product of L1, L2, and S; and
generating, based on the S pooled values corresponding to the S feature blocks and a threshold converted to a logarithm domain, the mask map corresponding to the first feature map.

**5.** The method according to any one of claims 1 to 4, wherein the probability distribution parameter further comprises N mean values, and the N mean values one-to-one correspond to the N feature points; and
before performing the first adjustment on the first feature map based on the first gain vector to obtain the second feature map, the method further comprises:
subtracting a corresponding mean value from a feature value of each feature point in the first feature map.

**6.** The method according to claim 4, wherein the pooling comprises at least one of the following: average pooling, maximum pooling, or minimum pooling.

**7.** The method according to any one of claims 1 to 6, wherein before performing the entropy encoding on the second feature map based on the N second indexes to obtain the bitstream, the method further comprises:
rounding the N second indexes.

**8.** A decoding method, wherein the method comprises:

receiving a bitstream, wherein the bitstream comprises encoded data of N feature points in a second feature map, a quantity of channels of the second feature map is c, a height of the second feature map is h, a width of the second feature map is w, N is a product of c, h, and w, and c, h, and w are positive integers;
determining a probability distribution parameter, wherein the probability distribution parameter comprises N first indexes, the N first indexes one-to-one correspond to N variances, and the N variances one-to-one correspond to the N feature points;
performing an addition operation on the N first indexes based on a second gain vector to obtain N second indexes, wherein the N second indexes one-to-one correspond to the N feature points;
performing entropy decoding on the encoded data of the N feature points based on the N second indexes to obtain the second feature map;
performing adjustment on the second feature map based on a first gain vector to obtain a first feature map, wherein the second gain vector is obtained by converting the first gain vector to a logarithm domain; and
performing reconstruction on the first feature map to obtain a reconstructed image of the image.

**9.** The method according to claim 8, wherein the bitstream comprises encoded data of N feature points in the second feature map obtained through third adjustment;
before performing reconstruction on the first feature map to obtain the reconstructed image of the image, the method further comprises:

performing sixth adjustment on the first feature map based on a first step, wherein the sixth adjustment is an inverse process of the third adjustment; and
before performing the entropy decoding on the encoded data of the N feature points based on the N second indexes to obtain the second feature map, the method further comprises:
performing fourth adjustment on the N second indexes based on a second step, wherein the second step is obtained by converting the first step to a logarithm domain, and the fourth adjustment is an addition operation.

**10.** The method according to claim 9, wherein the method further comprises:
generating a mask (mask) map corresponding to the first feature map, wherein the mask map is used for the sixth adjustment and/or the fourth adjustment.

**11.** The method according to claim 10, wherein generating the mask (mask) map of the first feature map comprises:

dividing the first feature map into S feature blocks, wherein a height of the feature block is L1, a width of the feature block is L2, and L1, L2, and S are positive integers;

performing pooling on Z second indexes corresponding to Z feature points comprised in the S feature blocks to obtain S pooled values corresponding to the S feature blocks, wherein Z is a product of L1, L2, and S; and

determining, based on the S pooled values corresponding to the S feature blocks and a threshold converted to a logarithm domain, the mask map corresponding to the first feature map.

**12.** The method according to any one of claims 8 to 11, wherein the probability distribution parameter further comprises N mean values, and the N mean values one-to-one correspond to the N feature points; and

before performing reconstruction on the first feature map to obtain the reconstructed image of the image, the method further comprises:

adding a corresponding mean value to a feature value of each feature point in the first feature map.

**13.** The method according to claim 11, wherein the pooling comprises at least one of the following: average pooling, maximum pooling, or minimum pooling.

**14.** The method according to any one of claims 8 to 13, wherein before performing the entropy decoding on the encoded data of the N feature points based on the N second indexes to obtain the second feature map, the method further comprises:

rounding the N second indexes.

**15.** An encoding method, wherein the encoding method comprises:

obtaining a to-be-encoded image;

performing feature extraction on the to-be-encoded image to obtain a first feature map, wherein a quantity of channels of the first feature map is c, a height of the first feature map is h, a width of the first feature map is w, the first feature map comprises N feature points, N is a product of c, h, and w, and c, h, and w are positive integers;

determining a probability distribution parameter corresponding to the first feature map, wherein the probability distribution parameter comprises N first indexes, the N first indexes one-to-one correspond to N variances, and the N variances one-to-one correspond to the N feature points;

performing first adjustment on the first feature map based on a first step to obtain a second feature map, wherein the second feature map comprises the N feature points;

performing second adjustment on first indexes corresponding to the N feature points based on a second step to obtain N second indexes, wherein the second step is obtained by converting the first step to a logarithm domain, the second adjustment is an addition operation, and the N second indexes one-to-one correspond to the N feature points; and

performing entropy encoding on the second feature map based on the N second indexes to obtain a bitstream.

**16.** The method according to claim 15, wherein the method further comprises:

generating a mask (mask) map corresponding to the first feature map, wherein the mask map is used for the first adjustment and/or the second adjustment.

**17.** The method according to claim 16, wherein generating the mask (mask) map of the first feature map comprises:

dividing the first feature map into S feature blocks, wherein a height of the feature block is L1, a width of the feature block is L2, and L1, L2, and S are positive integers;

performing pooling on Z first indexes corresponding to Z feature points comprised in the S feature blocks to obtain S pooled values corresponding to the S feature blocks, wherein Z is a product of L1, L2, and S; and

determining, based on the S pooled values corresponding to the S feature blocks and a threshold converted to a logarithm domain, the mask map corresponding to the first feature map.

**18.** The method according to any one of claims 15 to 17, wherein the probability distribution parameter further comprises N mean values, and the N mean values one-to-one correspond to the N feature points; and

before performing the first adjustment on the first feature map based on the first step to obtain the second feature map, the method further comprises:

subtracting a corresponding mean value from a feature value of each feature point in the first feature map.

19. The method according to claim 17, wherein the pooling comprises at least one of the following: average pooling, maximum pooling, or minimum pooling.

20. The method according to any one of claims 15 to 19, wherein before performing the entropy encoding on the second feature map based on the N second indexes to obtain the bitstream, the method further comprises: rounding the N second indexes.

21. A decoding method, wherein the decoding method comprises:

receiving a bitstream, wherein the bitstream comprises encoded data of N feature points in a second feature map, a quantity of channels of the second feature map is c, a height of the second feature map is h, a width of the second feature map is w, N is a product of c, h, and w, and c, h, and w are positive integers;

determining a probability distribution parameter, wherein the probability distribution parameter comprises N first indexes, the N first indexes one-to-one correspond to N variances, and the N variances one-to-one correspond to the N feature points;

performing an addition operation on the N first indexes based on a second step to obtain N second indexes, wherein the N second indexes one-to-one correspond to the N feature points;

performing entropy decoding on the encoded data of the N feature points based on the N second indexes to obtain the second feature map;

performing adjustment on the second feature map based on a first step to obtain a first feature map, wherein the second step is obtained by converting the first step to a logarithm domain; and

performing reconstruction on the first feature map to obtain a reconstructed image of the image.

22. The method according to claim 21, wherein the method further comprises: generating a mask (mask) map corresponding to the first feature map, wherein the mask map is used for the adjustment and/or the addition operation.

23. The method according to claim 22, wherein generating the mask (mask) map of the first feature map comprises:

dividing the first feature map into S feature blocks, wherein a height of the feature block is L1, a width of the feature block is L2, and L1, L2, and S are positive integers;

performing pooling on Z first indexes corresponding to Z feature points comprised in the S feature blocks to obtain S pooled values corresponding to the S feature blocks, wherein Z is a product of L1, L2, and S; and

determining, based on the S pooled values corresponding to the S feature blocks and a threshold converted to a logarithm domain, the mask map corresponding to the first feature map.

24. The method according to any one of claims 21 to 23, wherein the probability distribution parameter further comprises N mean values, and the N mean values one-to-one correspond to the N feature points; and

before performing reconstruction on the first feature map to obtain the reconstructed image of the image, the method further comprises:

adding a corresponding mean value to a feature value of each feature point in the first feature map.

25. The method according to claim 23, wherein the pooling comprises at least one of the following: average pooling, maximum pooling, or minimum pooling.

26. The method according to any one of claims 21 to 25, wherein before performing the entropy decoding on the encoded data of the N feature points based on the N second indexes to obtain the second feature map, the method further comprises:

rounding the N second indexes.

27. An electronic device, comprising:

a memory and a processor, wherein the memory is coupled to the processor; and

the memory stores program instructions, and when the program instructions are executed by the processor, the electronic device is enabled to perform the encoding method according to any one of claims 1 to 7, or perform the encoding method according to any one of claims 15 to 20.

28. An electronic device, comprising:

a memory and a processor, wherein the memory is coupled to the processor; and
the memory stores program instructions, and when the program instructions are executed by the processor, the electronic device is enabled to perform the decoding method according to any one of claims 8 to 14, or perform the encoding method according to any one of claims 21 to 26.

29. A chip, comprising one or more interface circuits and one or more processors, wherein the one or more processors receive or send data via the one or more interface circuits, and when the one or more processors execute computer instructions, a step of the method according to any one of claims 1 to 7 is performed, or a step of the method according to any one of claims 15 to 20 is performed.

30. A chip, comprising one or more interface circuits and one or more processors, wherein the one or more processors receive or send data via the one or more interface circuits, and when the one or more processors execute computer instructions, a step of the method according to any one of claims 8 to 14 is performed, or a step of the method according to any one of claims 21 to 26 is performed.

31. A computer-readable storage medium, wherein the computer-readable storage medium stores a computer program, and when the computer program is run on a computer or a processor, the computer or the processor is enabled to perform the method according to any one of claims 1 to 26.

32. A computer program product, wherein the computer program product comprises computer instructions, and when the computer instructions are executed by a computer or a processor, a step of the method according to any one of claims 1 to 26 is performed.

First electronic device

| First capturing module | → | First encoding module | → | First channel encoding module | → |
|---|---|---|---|---|---|

| First playing module | ← | First decoding module | ← | First channel decoding module | ← |

Wireless or wired network communication device

⇕

Second electronic device

| Second playing module | ← | Second decoding module | ← | Second channel decoding module | ← |
|---|---|---|---|---|---|

| Second capturing module | → | Second encoding module | → | Second channel encoding module | ← |

Wireless or wired network communication device

FIG. 1A

EP 4 697 706 A1

Wireless or core network device

| Channel decoding module | → | Another decoding module | → | Encoding module | → | Channel encoding module |

(1)

Wireless or core network device

| Channel decoding module | → | Decoding module | → | Another encoding module | → | Channel encoding module |

(2)

FIG. 1B

FIG. 2A

First gain
vector
S204

First feature map                    Second feature map

Perform first
adjustment

S201

Obtain
an
image

To-be-
encoded
image

Perform
feature
extraction

First
feature map

Determine a
probability
distribution
parameter

First index of
a variance

Second gain vector

Perform
second
adjustment

Second
index of the
variance

Perform
entropy
encoding

Bitstream

S202                    S203                    S205                    S206

FIG. 2B

FIG. 3

EP 4 697 706 A1

First step S404

First feature map → Perform first adjustment → Second feature map

S401

To-be-encoded image

Obtain an image → Perform feature extraction → First feature map → Determine a probability distribution parameter → First index of a variance → Perform second adjustment → Second index of the variance → Perform entropy encoding → Bitstream

Second step

S402  S403  S405  S406

FIG. 4A

EP 4 697 706 A1

Feature block 1        Feature block 2    Feature block 1        Feature block 2

| 1 | 1 | 1 | 1 | 0 | 0 | 0 | 0 |
|---|---|---|---|---|---|---|---|
| 1 | 1 | 1 | 1 | 0 | 0 | 0 | 0 |
| 1 | 1 | 1 | 1 | 0 | 0 | 0 | 0 |
| 1 | 1 | 1 | 1 | 0 | 0 | 0 | 0 |
| 0 | 0 | 0 | 0 | 1 | 1 | 1 | 1 |
| 0 | 0 | 0 | 0 | 1 | 1 | 1 | 1 |
| 0 | 0 | 0 | 0 | 1 | 1 | 1 | 1 |
| 0 | 0 | 0 | 0 | 1 | 1 | 1 | 1 |

| 0 | 0 | 0 | 0 | 1 | 1 | 1 | 1 |
|---|---|---|---|---|---|---|---|
| 0 | 0 | 0 | 0 | 1 | 1 | 1 | 1 |
| 0 | 0 | 0 | 0 | 1 | 1 | 1 | 1 |
| 0 | 0 | 0 | 0 | 1 | 1 | 1 | 1 |
| 1 | 1 | 1 | 1 | 0 | 0 | 0 | 0 |
| 1 | 1 | 1 | 1 | 0 | 0 | 0 | 0 |
| 1 | 1 | 1 | 1 | 0 | 0 | 0 | 0 |
| 1 | 1 | 1 | 1 | 0 | 0 | 0 | 0 |

Feature block 3        Feature block 4    Feature block 3        Feature block 4

(1)             (2)

FIG. 4B

FIG. 5

FIG. 6

S701

S702

S703

Receive a bitstream → Bitstream → Determine a probability distribution parameter → First index of a variance → Perform second adjustment ← Second gain vector

Mean value

Second index of the variance

S709

S704

First feature map

Perform reconstruction ← First feature map ← Perform addition

S708

Perform fourth adjustment ← Second step

Reconstructed image

Fourth feature map

Third index of the variance

First gain vector

Perform sixth adjustment ← Second feature map ← Perform fifth adjustment ← Fifth feature map ← Perform entropy decoding

First step       S707

S706

S705

FIG. 7

801

First obtaining module

802

First encoding network

803

First entropy estimation network

804

First adjustment module

805

First entropy encoding network

FIG. 8

901

First receiving module

902

Second entropy estimation network

903

Second adjustment module

904

First entropy decoding network

905

First decoding network

FIG. 9

```
┌─────────────────────────────────┐
│      Second obtaining module    │──── 1001
└─────────────────────────────────┘
                │
┌─────────────────────────────────┐
│      Second encoding network    │──── 1002
└─────────────────────────────────┘
                │
┌─────────────────────────────────┐
│   Third entropy estimation network │──── 1003
└─────────────────────────────────┘
                │
┌─────────────────────────────────┐
│      Third adjustment module    │──── 1004
└─────────────────────────────────┘
                │
┌─────────────────────────────────┐
│   Second entropy encoding network │──── 1005
└─────────────────────────────────┘
```

FIG. 10

```
┌─────────────────────────────────┐
│      Second receiving module    │──── 1101
└─────────────────────────────────┘
                │
┌─────────────────────────────────┐
│  Fourth entropy estimation network │──── 1102
└─────────────────────────────────┘
                │
┌─────────────────────────────────┐
│      Fourth adjustment module   │──── 1103
└─────────────────────────────────┘
                │
┌─────────────────────────────────┐
│   Second entropy decoding network │──── 1104
└─────────────────────────────────┘
                │
┌─────────────────────────────────┐
│      Second decoding network    │──── 1105
└─────────────────────────────────┘
```

FIG. 11

1200

1201

Processor

1203

1204

Memory

1202

Transceiver/Transceiver
pin

FIG. 12

## INTERNATIONAL SEARCH REPORT

| International application No. |
|---|
| **PCT/CN2024/087795** |

| A. | CLASSIFICATION OF SUBJECT MATTER |
|---|---|

H04N19/139(2014.01)i

According to International Patent Classification (IPC) or to both national classification and IPC

| B. | FIELDS SEARCHED |
|---|---|

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNTXT, VEN, USTXT, ENTXT, CNKI: 编码, 解码, 特征图, 概率, 方差, 均值, 索引, 对数, 乘法, 加法, 掩膜图, 步长, 池化, code, decode, feature map, probability, variance, mean, mask map, logarithm, step size, multiplication, addition

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 116112673 A (HUAWEI TECHNOLOGIES CO., LTD.) 12 May 2023 (2023-05-12) description, paragraphs 0108-0242 | 1-32 |
| A | CN 112702600 A (NANJING UNIVERSITY et al.) 23 April 2021 (2021-04-23) entire document | 1-32 |
| A | CN 116016920 A (ZHEJIANG DAHUA TECHNOLOGY CO., LTD.) 25 April 2023 (2023-04-25) entire document | 1-32 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 July 2024** | **15 July 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2024/087795** |

| Patent document cited in search report | | | Publication date (day/month/year) | Patent family member(s) | Publication date (day/month/year) |
| --- | --- | --- | --- | --- | --- |
| CN | 116112673 | A | 12 May 2023 | None | |
| CN | 112702600 | A | 23 April 2021 | None | |
| CN | 116016920 | A | 25 April 2023 | None | |

Form PCT/ISA/210 (patent family annex) (July 2022)

**REFERENCES CITED IN THE DESCRIPTION**

**Patent documents cited in the description**

- CN 202310848558